# EUROPEAN PATENT SPECIFICATION

(11) **EP 4 086 157 B1**
(45) Date of publication and mention of the grant of the patent: **01.01.2025**
(21) Application number: 20961643.2
(22) Date of filing: 16.11.2020
(51) Int. Cl.: F02D 19/06, F02M 21/02, F17C 9/02, F17D 1/00, B63B 25/16, B63J 99/00

(54) **PIPELINE SYSTEM AND DISCHARGE METHOD**
ROHRLEITUNGSSYSTEM UND ENTLADUNGSVERFAHREN
SYSTÈME DE CANALISATION ET PROCÉDÉ D'ÉVACUATION

(43) Date of publication of application: 09.11.2022
(73) Proprietor: Imabari Shipbuilding Co., Ltd., Ehime 799-2195 (JP)
(72) Inventor: HIGAKI, Yukito, Imabari-shi, Ehime 799-2195 (JP); TAKEMA, Shoichi, Marugame-shi, Kagawa 763-8511 (JP); INOUE, Hisatsugu, Marugame-shi, Kagawa 763-8511 (JP); TAKAHASHI, Hiroaki, Marugame-shi, Kagawa 763-8511 (JP)
(74) Representative: Maiwald GmbH
(86) International application number: PCT/JP2020/042583
(87) International publication number: WO 2022/102120

(56) References cited:
- EP-A1- 3 138 767
- WO-A1-2018/185958
- JP-A- 2018 090 023
- JP-A- 2018 176 868
- JP-A- 2020 050 135
- JP-A- 2020 050 135
- KR-A- 20100 137 758
- KR-A- 20200 043 594
- KR-A- 20200 043 594

## Description

### Technical Field

The present invention relates to a pipeline system provided in a marine vessel that discharges vent gas vaporized from liquefied gas fuel from a vent post, a method for discharging the vent gas using the pipeline system, and a control system that controls a valve provided in the pipeline system.

### Background Art

In conventionally used marine vessels, engines are driven using fuel liquefied from gas (hereinafter, "liquefied gas fuel"), such as LPG. In these types of marine vessels, vent gas vaporized from the residual liquefied gas fuel that has not been used in the engines is discharged from vertically provided vent posts.

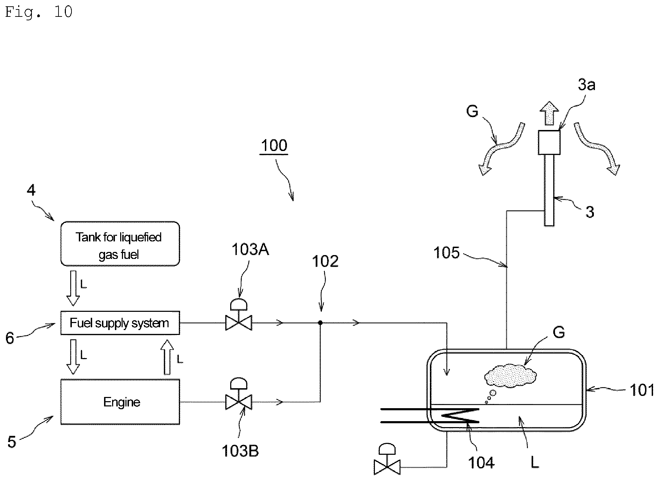

In recent years, an example of such marine vessels is a marine vessel with an engine that can selectively use liquefied gas fuel and fuel oil such as heavy oil (e.g., PTL 1). This type of marine vessel comprises, as shown in Fig. 10, a tank 4 for liquefied gas fuel, a fuel supply system 6 that supplies the liquefied gas fuel L from the tank 4 to an engine 5, a tank for fuel oil (not shown), and a fuel oil system (not shown) that supplies the fuel oil from the tank to the engine 5. In such a marine vessel, for example, when the fuel used in the engine 5 is switched from the liquefied gas fuel L to the fuel oil, it is necessary to vaporize the residual liquefied gas fuel L present in the engine 5 and the fuel supply system 6, and discharge it from a vent post 3. For this purpose, a pipeline system 100 shown in Fig. 10 is used.

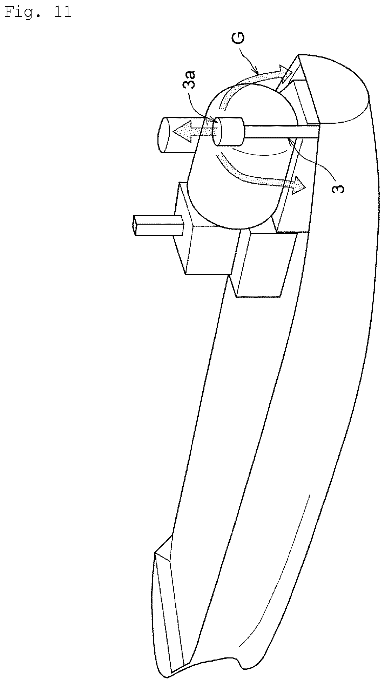

The pipeline system 100 has a drum 101, a fuel pipeline 102, fuel pipeline valves 103A and 103B, a heating means 104, and a gas pipeline 105. In the pipeline system 100, while the fuel pipeline valve 103A is opened, the liquefied gas fuel L present in the fuel supply system 6 is guided through the fuel pipeline 102 into the drum 101. Further, while the fuel pipeline valve 103B is opened, the liquefied gas fuel L present in the engine 5 is guided through the fuel pipeline 102 into the drum 101. The heating means 104 is to vaporize the liquefied gas fuel L present in the drum 101 by heating, and vent gas G vaporized from the liquefied gas fuel L in the drum 101 is guided through the gas pipeline 105 to the vent post 3, and discharged from the vent 3a of the vent post 3 (Figs. 10 and 11).

### Citation List

### Patent Literature

PTL 1: JP2020-050135A

### Summary of Invention

### Technical Problem

In the conventional pipeline system 100 shown in Fig. 10, the inside of the drum 101 is always open to the atmosphere through the gas pipeline 105 and the vent post 3. As a result, the air pressure in the drum 101 is always about the same as atmospheric pressure; thus, the vent gas G vaporized in the drum 101 has a low temperature and a low pressure, and has a low kinetic energy. Therefore, the flow rate of the vent gas G discharged from the vent 3a of the vent post 3 is reduced. For this reason, as shown in Fig. 11, the vent gas G discharged from the vent 3a may fall around the vent post 3, and as a result, the space around the vent post 3 may become an explosive atmosphere.

The present invention was made in view of the above circumstances, and an object thereof is to provide a pipeline system that can discharge vent gas from the vent of a vent post at a high speed, thereby spreading the vent gas far away from the vent post to reduce the amount of the vent gas falling around the vent post; a method for discharging the vent gas using the pipeline system; and a control system that controls a valve provided in the pipeline system.

### Solution to Problem

In order to achieve the above object, the present invention includes a pipeline system according to claim 1, a method according to claim 4 and a control system according to claim 7.

### Advantageous Effects of Invention

According to the present invention, vent gas can be discharged from the vent of a vent post at a high speed, thereby spreading the vent gas far away from the vent post to reduce the amount of the vent gas falling around the vent post.

### Brief Description of Drawings

Fig. 1 is a schematic diagram showing a pipeline system according to an embodiment of the present invention.
Fig. 2 is a perspective view showing a marine vessel provided with the pipeline system according to the embodiment of the present invention.
Fig. 3 is a flowchart showing a method for discharging vent gas using the pipeline system according to the embodiment of the present invention.
Fig. 4 is a functional block diagram of a control device that controls a gas pipeline valve.
Fig. 5 is a flowchart showing processing performed by the control device that controls the gas pipeline valve.
Fig. 6 is a functional block diagram of a control device that controls a fuel pipeline valve and a gas pipeline valve.
Fig. 7 is a flowchart showing processing performed by the control device that controls the fuel pipeline valve and the gas pipeline valve.
Fig. 8 is a functional block diagram of a control device that controls a fuel pipeline valve and a gas pipeline valve.
Fig. 9 is a flowchart showing processing performed by the control device that controls the fuel pipeline valve and the gas pipeline valve.
Fig. 10 is a schematic diagram showing a conventional pipeline system.
Fig. 11 is a perspective view showing a marine vessel provided with the conventional pipeline system.

### Description of Embodiments

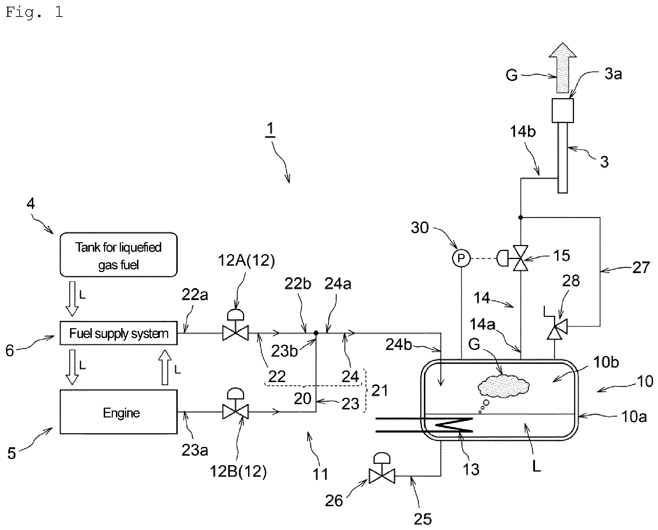

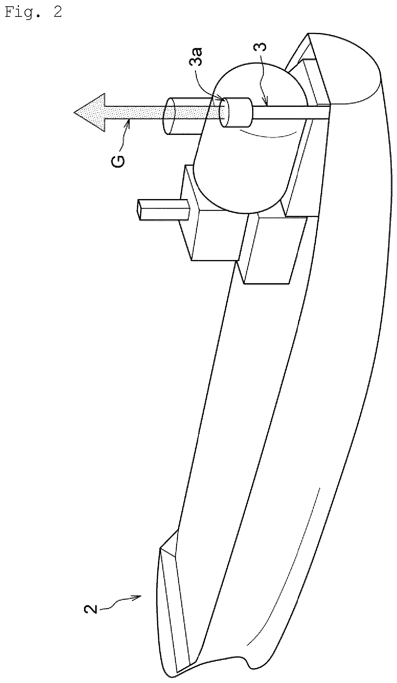

An embodiment of the present invention is described below with reference to the accompanying drawings. Fig. 1 is a schematic diagram showing a pipeline system 1 according to the embodiment of the present invention. Fig. 2 is a perspective view showing a marine vessel 2 provided with the pipeline system 1.

The pipeline system 1 (Fig. 1) according to the embodiment of the present invention is provided in the marine vessel 2 (Fig. 2) that discharges vent gas G vaporized from liquefied gas fuel L from a vent post 3. In the present invention, the liquefied gas fuel L refers to fuel liquefied from gas, and examples of the liquefied gas fuel L include LPG (liquefied petroleum gas), LNG (liquefied natural gas), LAG (liquefied ammonia gas), and the like.

The marine vessel 2 (Fig. 2) is provided with a tank 4 (Fig. 1) that stores the liquefied gas fuel L, an engine 5 (Fig. 1) that can selectively use the liquefied gas fuel L and fuel oil, a fuel supply system 6 (Fig. 1) that can supply the liquefied gas fuel L from the tank 4 to the engine 5, a fuel oil tank (not shown) that stores the fuel oil, and a fuel oil system (not shown) that can supply the fuel oil from the fuel oil tank to the engine 5. In the marine vessel 2, the liquefied gas fuel L or fuel oil is supplied to the engine 5, whereby the engine 5 can be driven to navigate.

The fuel supply system 6 comprises a pump and a heat exchanger. Due to the pump, the liquefied gas fuel L present in the fuel supply system 6 can be supplied to the engine 5, and the liquefied gas fuel L that has not been used in the engine 5 can be returned to the fuel supply system 6. The liquefied gas fuel L present in the fuel supply system 6 includes the liquefied gas fuel L supplied from the tank 4, and the liquefied gas fuel L returned from the engine 5. Moreover, in the fuel supply system 6, the temperature of the liquefied gas fuel L supplied to the engine 5 can be adjusted within a predetermined range by the heat exchanger.

The fuel supply system 6 and the engine 5 are each provided with a gas injection device (not shown) that injects non-combustible gas, such as nitrogen. Due to the pressure of the non-combustible gas injected from the gas injection device of the fuel supply system 6, the liquefied gas fuel L present in the fuel supply system 6 can be pumped to the pipeline system 1. Further, due to the pressure of the non-combustible gas injected from the gas injection device of the engine 5, the liquefied gas fuel L present in the engine 5 can be pumped to the pipeline system 1.

The vent post 3 is vertically provided on the deck of the marine vessel 2, and a vent 3a for discharging the vent gas G is formed at the upper end of the vent post 3.

The pipeline system 1 is used, for example, when the fuel used in the engine 5 is switched from the liquefied gas fuel L to fuel oil, to vaporize the residual liquefied gas fuel L present in the engine 5 and the fuel supply system 6, and discharge it from the vent 3a of the vent post 3.

As shown in Fig. 1, the pipeline system 1 comprises a drum 10 having an interior 10b surrounded by a wall 10a, a fuel pipeline 11 for guiding the liquefied gas fuel L to the interior 10b of the drum 10, a fuel pipeline valve 12 opening and closing the fuel pipeline 11, a heating means 13 for heating the liquefied gas fuel L guided to the interior 10b of the drum 10 to generate vent gas G, a gas pipeline 14 for guiding the vent gas G present in the interior 10b of the drum 10 to the vent post 3, and a gas pipeline valve 15 opening and closing the gas pipeline 14.

The wall 10a of the drum 10 is made of carbon steel, and is excellent in pressure resistance.

The fuel pipeline 11 configures a system fuel pipeline 20 for guiding the liquefied gas fuel L present in the fuel supply system 6 to the interior 10b of the drum 10, and an engine fuel pipeline 21 for guiding the liquefied gas fuel L present in the engine 5 to the interior 10b of the drum 10. A first fuel pipeline valve 12A opening and closing the system fuel pipeline 20, and a second fuel pipeline valve 12B opening and closing the engine fuel pipeline 21 are provided as the fuel pipeline valve 12. These fuel pipeline valves 12A and 12B can be valves that can switch opening and closing manually or automatically.

More specifically, the fuel pipeline 11 has a first branch pipeline 22 having one end 22a connected to the fuel supply system 6, a second branch pipeline 23 having one end 23a connected to the engine 5, and a main pipeline 24 having one end 24a connected to the other end 22b of the first branch pipeline 22 and the other end 23b of the second branch pipeline 23, and the other end 24b connected to the drum 10. The system fuel pipeline 20 is composed of the first branch pipeline 22 and the main pipeline 24. The engine fuel pipeline 21 is composed of the second branch pipeline 23 and the main pipeline 24. The first fuel pipeline valve 12A opens and closes the first branch pipeline 22, and the second fuel pipeline valve 12B opens and closes the second branch pipeline 23.

In the illustrated example, the main pipeline 24 is used as part of the system fuel pipeline 20 and part of the engine fuel pipeline 21; however, the system fuel pipeline 20 and the engine fuel pipeline 21 may be individually independent pipelines. In this case, a first fuel pipeline valve 12A is provided to open and close the system fuel pipeline 20 manually or automatically, and a second fuel pipeline valve 12B is provided to open and close the engine fuel pipeline 21 manually or automatically.

The heating means 13 is, for example, a heat exchanger that flows high-temperature fluid (high-temperature liquid or high-temperature gas) through the cavity of a tube. In this case, the tube is allowed to penetrate through the wall 10a of the drum 10 so that the tube is inserted into the drum 10. Then, by heat exchange with the fluid flowing through the cavity of the tube, the liquefied gas fuel L guided to the interior 10b of the drum 10 is heated. As the heating means 13, equipment equipped with a heating element, such as a heating wire, may be used in place of the heat exchanger mentioned above.

One end 14a of the gas pipeline 14 is connected to the drum 10, and the other end 14b of the gas pipeline 14 is connected to the vent post 3. The gas pipeline valve 15 opens and closes the gas pipeline 14. A valve that can switch opening and closing manually or automatically can be used as the gas pipeline valve 15.

According to the pipeline system 1, when one or both of the first and second fuel pipeline valves 12A and 12B, and the gas pipeline valve 15 are opened, the liquefied gas fuel L can be pumped through the fuel pipeline 11 to the interior 10b of the drum 10.

For example, when the first fuel pipeline valve 12A and the gas pipeline valve 15 are opened, and the second fuel pipeline valve 12B is closed, the liquefied gas fuel L present in the fuel supply system 6 can be pumped through the system fuel pipeline 20 (first branch pipeline 22 and main pipeline 24) to the interior 10b of the drum 10, due to the pressure of the non-combustible gas injected from the gas injection device of the fuel supply system 6.

Further, for example, when the second fuel pipeline valve 12B and the gas pipeline valve 15 are opened, and the first fuel pipeline valve 12A is closed, the liquefied gas fuel L present in the engine 5 can be pumped through the engine fuel pipeline 21 (second branch pipeline 23 and main pipeline 24) to the interior 10b of the drum 10, due to the pressure of the non-combustible gas injected from the gas injection device of the engine 5.

Moreover, for example, when the first and second fuel pipeline valves 12A and 12B, and the gas pipeline valve 15 are opened, the liquefied gas fuel L present in the fuel supply system 6 and the liquefied gas fuel L present in the engine 5 can be pumped through the fuel pipeline 11 to the interior 10b of the drum 10, due to the pressure of the non-combustible gas injected from the gas injection device of the fuel supply system 6 and the gas injection device of the engine 5.

According to the pipeline system 1, when the gas pipeline valve 15 and the first and second fuel pipeline valves 12A and 12B are closed, the interior 10b of the drum 10 can be prevented from communicating with a space where air exists. Therefore, as described above, while the gas pipeline valve 15 and the fuel pipeline valves 12A and 12B are closed, when the liquefied gas fuel L guided to the interior 10b of the drum 10 is heated by the heating means 13 to generate vent gas G, the temperature and pressure of the vent gas G present within the drum 10 can be increased to enhance the internal energy. Then, when the gas pipeline valve 15 is opened with the internal energy of vent gas G enhanced in this way, the vent gas G converted into a high kinetic energy is guided to the vent post 3 through the gas pipeline 14. Therefore, the vent gas G can be discharged from the vent 3a of the vent post 3 at a high speed. As a result, the vent gas G can be diffused far away from the vent post 3, and the amount of the vent gas G falling from the vent 3a around the vent post 3 can be reduced. Thus, a situation where the space around the vent post 3 becomes an explosive atmosphere can be avoided.

Moreover, according to the pipeline system 1, the wall 10a of the drum 10 is made of carbon steel that is excellent in pressure resistance, whereby even when the pressure of the vent gas G present within the drum 10 is increased, as described above, damage to the wall 10a of the drum 10 can be prevented. Therefore, it is possible to stably continue to discharge the vent gas G from the vent 3a at a high speed. It is not essential for the present invention to use carbon steel to form the wall 10a of the drum 10; the wall 10a of the drum 10 may be made of a material other than carbon steel.

In addition to the configuration described above, the pipeline system 1 shown in Fig. 1 is provided with, as pipelines connected to the drum 10, a discharge pipeline 25 provided with a discharge pipeline valve 26, and a discharge pipeline 27 provided with a safety valve 28.

The discharge pipeline 25 is provided to discharge lubricating oil mixed in the liquefied gas fuel L within the drum 10, and waste water accumulated in the drum 10 during maintenance of the pipeline system 1. The discharge pipeline valve 26 is opened when the lubricating oil or waste water is discharged.

The discharge pipeline 27 connects the drum 10 with the gas pipeline 14 in a position on the downstream side of the gas pipeline valve 15, and the safety valve 28 is provided on the drum 10 side of the discharge pipeline 27. If the internal pressure of the drum 10 increases more than expected, for example, due to problems with the gas pipeline valve 15 or malfunction of the pipeline system 1, the safety valve 28 is automatically activated and opened, so that the vent gas G within the drum 10 is guided through the discharge pipeline 27 and the gas pipeline 15 to the vent post 3, and discharged from the vent 3a. This prevents damage to the drum 10.

The discharge pipeline 25, discharge pipeline valve 26, discharge pipeline 27, and safety valve 28 are not necessarily required to vaporize the liquefied gas fuel L present in the engine 5 or the fuel supply system 6 and discharge it from the vent post 3, and may be omitted from the pipeline system 1.

When the discharge pipeline 25, discharge pipeline valve 26, discharge pipeline 27, and safety valve 28 are provided in the pipeline system 1, while the discharge pipeline valve 26 and the safety valve 28 are closed, the liquefied gas fuel L present in the fuel supply system 6 is pumped into the drum 10, the liquefied gas fuel L present in the engine 5 is pumped into drum 10, the liquefied gas fuel L guided into the drum 10 is heated by the heating means 13, and the vent gas G present in the drum 10 is guided to the vent post 3 and discharged from the vent 3a.

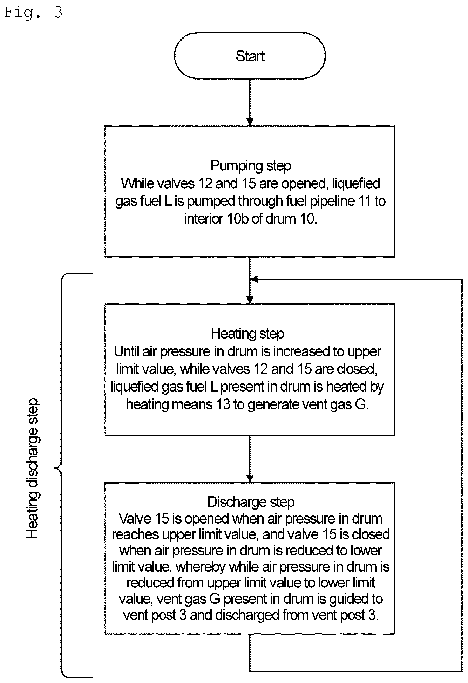

An example of the method for discharging vent gas G using the pipeline system 1 is described below with reference to Fig. 3.

The method for discharging vent gas G shown in Fig. 3 comprises a pumping step and a heating discharge step performed after the pumping step.

In the pumping step, while the fuel pipeline valve 12 and the gas pipeline valve 15 are opened, the liquefied gas fuel L is pumped through the fuel pipeline 11 to the interior 10b of the drum 10. Opening the fuel pipeline valve 12 includes opening one or both of the first and second fuel pipeline valves 12A and 12B. When the first fuel pipeline valve 12A and the gas pipeline valve 15 are opened, the liquefied gas fuel L present in the fuel supply system 6 is pumped to the interior 10b of the drum 10. When the second fuel pipeline valve 12B and the gas pipeline valve 15 are opened, the liquefied gas fuel L present in the engine 5 is pumped to the interior 10b of the drum 10. When the first and second fuel pipeline valves 12A and 12B, and the gas pipeline valve 15 are opened, the liquefied gas fuel L present in the fuel supply system 6 and the engine 5 is pumped to the interior 10b of the drum 10.

The heating discharge step includes a heating step that is performed until the air pressure in the interior 10b of the drum 10 is increased to an upper limit value equal to or higher than atmospheric pressure, and a discharge step that is performed until the air pressure in the interior 10b of the drum 10 is reduced from the upper limit value to a lower limit value equal to or higher than atmospheric pressure.

In the heating step, until the air pressure in the interior 10b of the drum 10 is increased to the upper limit value, while the fuel pipeline valve 12 and the gas pipeline valve 15 are closed, the liquefied gas fuel L present in the interior 10b of the drum 10 is heated by the heating means 13 to generate vent gas G. Closing the fuel pipeline valve 12 includes closing both of the first and second fuel pipeline valves 12A and 12B.

In the discharge step, the gas pipeline valve 15 is opened when the air pressure in the interior 10b of the drum 10 reaches the upper limit value, and the gas pipeline valve 15 is closed when the air pressure in the interior 10b of the drum 10 is reduced to the lower limit value, whereby during the time in which the air pressure in the interior 10b of the drum 10 is reduced from the upper limit value to the lower limit value, the vent gas G present in the interior 10b of the drum 10 is guided to the vent post 3 and discharged from the vent post 3. When the air pressure in the interior 10b of the drum 10 is reduced to the lower limit value, the gas pipeline valve 15 is closed, whereby the first and second fuel pipeline valves 12A and 12B, and the gas pipeline valve 15 are closed, and the step proceeds to the heating step.

When the above discharge method is performed, the pipeline system 1 is provided with a pressure sensor 30 (Fig. 1) that measures the air pressure in the interior 10b of the drum 10. Based on the measured value of the pressure sensor 30, the time in which the air pressure in the interior 10b of the drum 10 reaches the upper limit value or is reduced to the lower limit value is specified.

According to the above discharge method, the gas pipeline valve 15 is opened during the time in which the air pressure in the interior 10b of the drum 10 is in the range equal to or higher than atmospheric pressure (from the lower limit value to the upper limit value); thus, the vent gas G can be discharged at a high speed from the vent 3a of the vent post 3. Therefore, the vent gas G can be diffused far away from the vent post 3, and the amount of the vent gas G falling around the vent post 3 can be reduced; thus, a situation where the space around the vent post 3 becomes an explosive atmosphere can be avoided. In order to increase the discharge time of the vent gas G (i.e., the time in which the air pressure in the interior 10b of the drum 10 is reduced from the upper limit value to the lower limit value), it is preferable to heat the liquefied gas fuel L present in the interior 10b of the drum 10 by the heating means 13 to generate the vent gas G, not only in the heating step, but also in the discharge step. Further, when the discharge pipeline 25, discharge pipeline valve 26, discharge pipeline 27, and safety valve 28 are provided in the pipeline system **1,** the pumping step and the heating discharge step are performed while the discharge pipeline valve 26 and the safety valve 28 are closed.

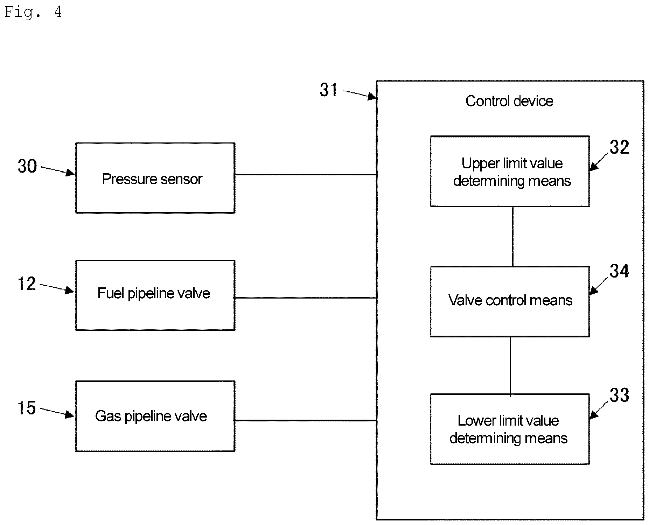

Further, in order to automatically open and close the gas pipeline valve 15 in the heating discharge step, the marine vessel 2 may be provided with a control device 31 (Fig. 4) that controls the gas pipeline valve 15 based on the measured value of the pressure sensor 30, while the fuel pipeline valve 12 is closed.

The control device 31 has, as means (functional block) for controlling the gas pipeline valve 15 while the fuel pipeline valve 12 is closed, an upper limit value determining means 32, a lower limit value determining means 33, and a valve control means 34 (Fig. 4). These means 32, 33, and 34 may be realized in a hardware manner; however, these means may also be realized in a software manner in such a manner that the processor of the control device 31 reads a program into memory and executes it.

When the means 32, 33, and 34 shown in Fig. 4 are realized in a hardware manner, the control device 31 includes, for example, a relay circuit, a pressure switch is used as the pressure sensor 30, and open/close valves with a drive source that utilizes hydraulic pressure or air pressure are used as the fuel pipeline valve 12 and the gas pipeline valve 15.

When the means 32, 33, and 34 shown in Fig. 4 are realized in a software manner, for example, the control device 31 is a device including a programmable logic controller (PLC), and a pressure transmitter is used as the pressure sensor 30. Alternatively, a computer including CPU, ROM, and RAM is used as the control device 31.

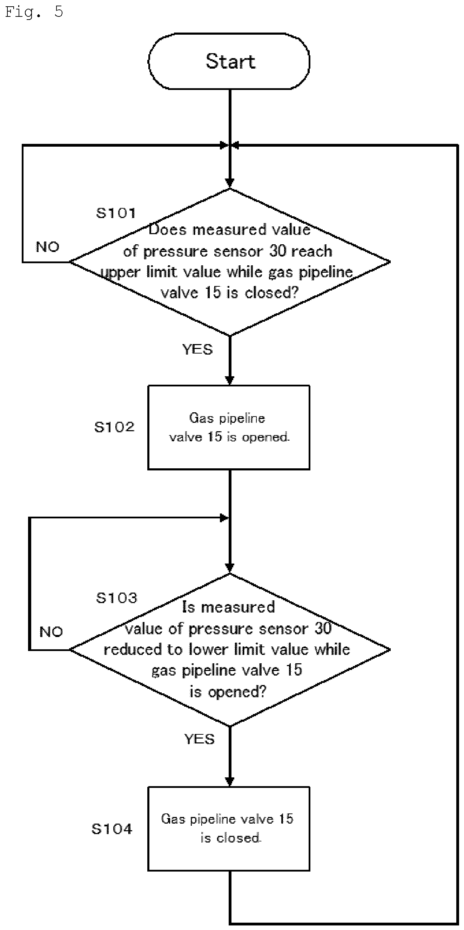

Fig. 5 is a flowchart of processing performed by the control device 31.

The processing shown in Fig. 5 is started in response to the closing of the fuel pipeline valve 12 and the gas pipeline valve 15 after the liquefied gas fuel L is pumped to the interior 10b of the drum 10 in the pumping step. Closing the fuel pipeline valve 12 means that both of the first and second fuel pipeline valves 12A and 12B are closed. Moreover, until the processing shown in Fig. 5 is executed, the fuel pipeline valve 12 is kept closed, and the liquefied gas fuel L present in the interior 10b of the drum 10 is heated by the action of the heating means 13 to generate vent gas G.

The upper limit value determining means 32 determines whether the measured value of the pressure sensor 30 reaches an upper limit value equal to or higher than atmospheric pressure, while the gas pipeline valve 15 is closed (S101). During the time in which it is not determined that the measured value of the pressure sensor 30 reaches the upper limit value (NO in S101), the gas pipeline valve 15 is kept closed.

When the upper limit value determining means 32 determines that the measured value of the pressure sensor 30 reaches the upper limit value, while the gas pipeline valve 15 is closed (YES in S101), the valve control means 34 opens the gas pipeline valve 15 (S102).

The lower limit value determining means 33 determines whether the measured value of the pressure sensor 30 is reduced to a lower limit value that is lower than the upper limit value and equal to or higher than atmospheric pressure, while the gas pipeline valve 15 is opened (S103).

During the time in which the lower limit value determining means 33 does not determine that the measured value of the pressure sensor 30 is reduced to the lower limit value, while the gas pipeline valve 15 is opened (NO in S103), the gas pipeline valve 15 is kept open.

When the lower limit value determining means 33 determines that the measured value of the pressure sensor 30 is reduced to the lower limit value, while the gas pipeline valve 15 is opened (YES in S103), the valve control means 34 closes the gas pipeline valve 15 (S104).

After the valve control means 34 closes the gas pipeline valve 15 in S104, the processing returns to determination by the upper limit value determining means 32 in S101.

According to the processing shown in Fig. 5, when determination is made as NO in S101 until the air pressure in the interior 10b of the drum 10 is increased to the upper limit value, the fuel pipeline valve 12 and the gas pipeline valve 15 are closed, and the heating step is performed.

Then, when the air pressure in the interior 10b of the drum 10 reaches the upper limit value, determination is made as YES in S101, and S102 is performed, thereby opening the gas pipeline valve 15 while the fuel pipeline valve 12 is closed, and starting the discharge step.

After S102 is performed, determination is made as NO in S103 during the time in which the air pressure in the interior 10b of the drum 10 is reduced from the upper limit value to the lower limit value, thereby continuing the discharge step, while the fuel pipeline valve 12 is closed and the gas pipeline valve 15 is opened.

When the air pressure in the interior 10b of the drum 10 is reduced to the lower limit value, determination is made as YES in S103, and S104 is performed, thereby stopping the discharge step, while the fuel pipeline valve 12 and the gas pipeline valve 15 are closed.

Then, the step proceeds to S101 after S104, so that the discharge step proceeds to the heating step.

The present invention is not limited to the above embodiment, and can be modified in various ways.

For example, the method for discharging vent gas G of the present invention can be such that the pumping step is performed until the liquid level position (height) of the liquefied gas fuel L stored in the interior 10b of the drum 10 is higher than a first position, the heating discharge step is performed until the liquid level position (height) of the liquefied gas fuel L stored in the interior 10b of the drum 10 is lowered to the first position, and the heating discharge step is suspended when the liquid level position of the liquefied gas fuel L stored in the interior 10b of the drum 10 reaches the first position. In this way, the heating step is always performed in the presence of the liquefied gas fuel L within the drum 10; thus, it is possible to avoid wasteful heating (heating with no liquid inside) by the heating means 13 in the absence of the liquefied gas fuel L within the drum 10. In the above case, the pipeline system is provided with a fuel sensor 40 that measures the liquid level position (height) of the liquefied gas fuel L stored in the interior 10b of the drum 10, and the time in which the liquid level position (height) of the liquefied gas fuel L stored in the interior 10b of the drum 10 reaches the first position is specified based on the measured value of the fuel sensor 40. As the fuel sensor 40, for example, an ultrasonic sensor, a radar sensor, a tuning-fork sensor, or a float sensor can be used.

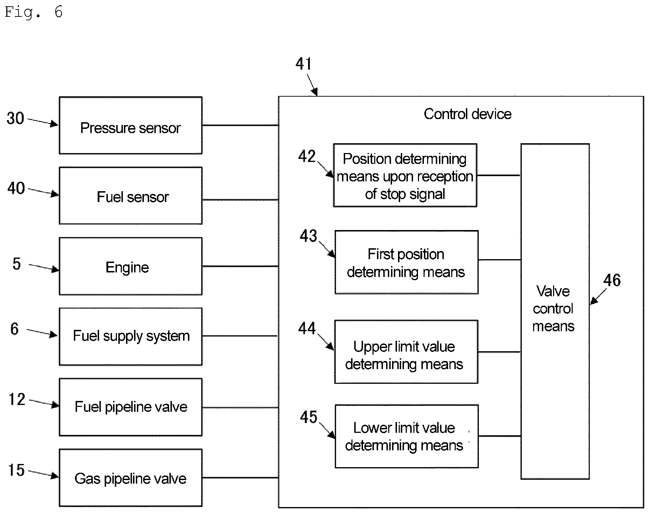

Moreover, when the method for discharging vent gas G of the present invention is as described above, in order to automatically open and close the fuel pipeline valve 12 and the gas pipeline valve 15, the marine vessel 2 may be provided with a control device 41 (Fig. 6) that performs processing based on the measured values of the pressure sensor 30 and fuel sensor 40 provided in the pipeline system 1.

The control device 41 (Fig. 6) has, as means (functional block) for controlling the fuel pipeline valve 12 and the gas pipeline valve 15, a position determining means 42 upon reception of a stop signal, a first position determining means 43, an upper limit value determining means 44, a lower limit value determining means 45, and a valve control means 46. These means 42, 43, 44, 45, and 46 may be realized in a hardware manner; however, these means may also be realized in a software manner in such a manner that the processor of the control device 41 reads a program into memory and executes it.

When the means 42, 43, 44, 45, and 46 shown in Fig. 6 are realized in a hardware manner, the control device 41 includes, for example, a relay circuit, a pressure switch is used as the pressure sensor 30, and open/close valves with a drive source that utilizes hydraulic pressure or air pressure are used as the fuel pipeline valve 12 and the gas pipeline valve 15.

When the means 42, 43, 44, 45, and 46 shown in Fig. 6 are realized in a software manner, for example, the control device 41 is a device including a programmable logic controller (PLC), and a pressure transmitter is used as the pressure sensor 30. Alternatively, a computer including CPU, ROM, and RAM is used as the control device 41.

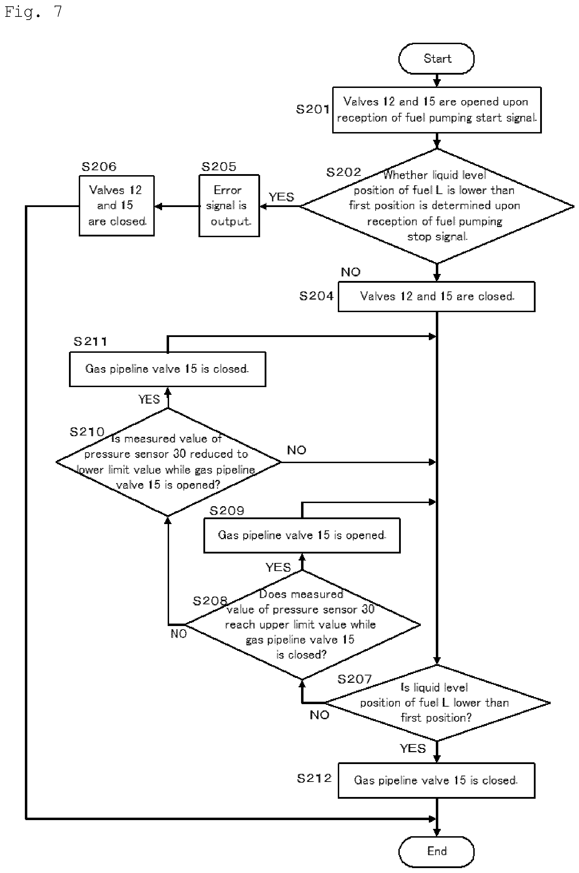

Fig. 7 is a flowchart of processing performed by the control device 41. The processing shown in Fig. 7 is executed on the condition that the signal transmissions shown in a and b below are performed, or that the signal transmissions shown in c and d below are performed. The time in which the signal transmissions shown in a and b below are performed, and the time in which the signal transmissions shown in c and d below are performed, are set as different times.

a: When pumping of the liquefied gas fuel L present in the engine 5 to the interior 10b of the drum 10 is started, a fuel pumping start signal is transmitted from the engine 5 to the control device 41.
b: When pumping of the liquefied gas fuel L present in the engine 5 to the interior 10b of the drum 10 is stopped, a fuel pumping stop signal is transmitted from the engine 5 to the control device 41.
c: When pumping of the liquefied gas fuel L present in the fuel supply system 6 to the interior 10b of the drum 10 is started, a fuel pumping start signal is transmitted from the fuel supply system 6 to the control device 41.
d: When pumping of the liquefied gas fuel L present in the fuel supply system 6 to the interior 10b of the drum 10 is stopped, a fuel pumping stop signal is transmitted from the fuel supply system 6 to the control device 41.

Before the processing shown in Fig. 7 is performed, the fuel pipeline valve 12 (first and second fuel pipeline valves 12A and 12B) and the gas pipeline valve 15 are closed. The processing of Fig. 7 is described below.

Upon reception of a fuel pumping start signal by the control device 41 from one of the engine 5 and the fuel supply system 6, the valve control means 46 opens the fuel pipeline valve 12 and the gas pipeline valve 15 (S201). Opening the fuel pipeline valve 12 in S201 means that one of the first and second fuel pipeline valves 12A and 12B is opened. When S201 is performed, a pumping step can be started to pump the liquefied gas fuel L present in one of the engine 5 and the fuel supply system 6 to the interior 10b of the drum 10.

Then, upon reception of a fuel pumping stop signal by the control device 41 from the sender of the fuel pumping start signal, the position determining means 42 upon reception of a stop signal determines, based on the measured value of the fuel sensor 40, whether the liquid level position of the liquefied gas fuel L stored in the interior 10b of the drum is lower than the first position (S202). Hereinafter, "the liquid level position of the liquefied gas fuel L stored in the interior 10b of the drum" is appropriately referred to as "the liquid level position of the liquefied gas fuel L within the drum 10."

When it is not determined in S202 that the liquid level position of the liquefied gas fuel L within the drum 10 is lower than the first position (NO in S202), the valve control means 46 closes the fuel pipeline valve 12 and the gas pipeline valve 15 (S204). Closing the fuel pipeline valve 12 in S204 means that one of the first and second fuel pipeline valves 12A and 12B that has been opened in S201 is closed.

For example, when the sender of the fuel pumping start signal in S201 and the sender of the fuel pumping stop signal in S202 are the fuel supply system 6, the valve control means 46 opens the first fuel pipeline valve 12A and the gas pipeline valve 15 in S201, and closes the first fuel pipeline valve 12A and the gas pipeline valve 15 in S204.

Moreover, when the sender of the fuel pumping start signal in S201 and the sender of the fuel pumping stop signal in S202 are the engine **5,** the valve control means 46 opens the second fuel pipeline valve 12B and the gas pipeline valve 15 in S201, and closes the second fuel pipeline valve 12B and the gas pipeline valve 15 in S204.

Then, S204 is performed, thereby stopping the pumping step of pumping the liquefied gas fuel L present in one of the engine 5 and the fuel supply system 6 through the fuel pipeline 11 to the interior 10b of the drum 10.

The fuel pumping stop signal is transmitted from one of the engine 5 and the fuel supply system 6 to the control device 41 when the liquid level position of the liquefied gas fuel L present in one of the engine 5 and the fuel supply system 6 (hereinafter, "the liquid level position of the liquefied gas fuel L on the engine 5 side") is lowered to a predetermined position. The predetermined position is determined by experience. The determination in S202 is performed based on "the idea that when the liquid level position of the liquefied gas fuel L on the engine 5 side is lowered to the predetermined position, the liquid level position of the liquefied gas fuel L within the drum 10 should be equal to or higher than the first position."

When it is determined in S202 that the liquid level position of the liquefied gas fuel L within the drum 10 is lower than the first position (YES in S202), the position determining means 42 upon reception of a stop signal outputs an error signal indicating that the liquid level position of the liquefied gas fuel L within the drum 10 is lower than the first position (S205), the valve control means 26 closes the fuel pipeline valve 12 and the gas pipeline valve 15 (S206), and the processing shown in Fig. 7 is stopped. In this case, the output of the error signal notifies the user that the liquid level position of the liquefied gas fuel L within the drum 10 is lower than the first position, and the user performs, for example, resetting of the predetermined position (i.e., the user rests the liquid level position of the liquefied gas fuel L present in the engine 5 or the fuel supply system 6 when the engine 5 or the fuel supply system 6 transmits a fuel pumping stop signal to the control device 41). Closing the fuel pipeline valve 12 in S206 means that one of the first and second fuel pipeline valves 12A and 12B that has been opened in S201 is closed.

After determination is made as NO in S202 and S204 is performed, the first position determining means 43 determines, based on the measured value of the fuel sensor 40, whether the liquid level position of the liquefied gas fuel L within the drum 10 is lower than the first position (S207).

When the first position determining means 43 does not determine that the liquid level position of the liquefied gas fuel L within the drum 10 is lower than the first position (NO in S207), the upper limit value determining means 44 determines whether the measured value of the pressure sensor 30 reaches an upper limit value equal to or higher than atmospheric pressure, while the gas pipeline valve 15 is closed (S208).

When the upper limit value determining means 44 determines that the measured value of the pressure sensor 30 reaches the upper limit value while the gas pipeline valve 15 is closed (YES in S208), the valve control means 46 opens the gas pipeline valve 15 (S209).

When the upper limit value determining means 44 does not determine that the measured value of the pressure sensor 30 reaches the upper limit value while the gas pipeline valve 15 is closed (NO in S208), the lower limit value determining means 45 determines whether the measured value of the pressure sensor 30 is reduced to a lower limit value that is lower than the upper limit value and equal to or higher than atmospheric pressure, while the gas pipeline valve 15 is opened (S210).

By using the opening and closing of the gas pipeline valve 15 as the determination condition, the lower limit value determining means 45 makes determination separately when the measured value of the pressure sensor 30 (air pressure within the drum 10) is increased to the lower limit value while the gas pipeline valve 15 is closed, and when the measured value of the pressure sensor 30 (air pressure within the drum 10) is reduced to the lower limit value while the gas pipeline valve 15 is opened. That is, when the measured value of the pressure sensor 30 is increased to the lower limit value (when reaching the lower limit value from a value lower than the lower limit value), the lower limit value determining means 45 determines NO in S210 because the gas pipeline valve 15 is not opened. Further, when the measured value of the pressure sensor 30 is reduced to the lower limit value (when reaching the lower limit value from a value higher than the lower limit value), the lower limit value determining means 45 determines YES in S210 because the gas pipeline valve 15 is opened.

When the lower limit value determining means 45 determines that the measured value of the pressure sensor 30 is reduced to the lower limit value while the gas pipeline valve 15 is opened (YES in S210), the valve control means 46 closes the gas pipeline valve 15 (S211).

Then, after the valve control means 46 opens the gas pipeline valve 15 in S209, when the lower limit value determining means 45 determines that the measured value of the pressure sensor 30 is not reduced to the lower limit value in S210 (NO in S210), or after the valve control means 46 closes the gas pipeline valve 15 in S211, the processing returns to determination by the first position determining means 43 in S207.

Then, when the first position determining means 43 determines that the liquid level position of the liquefied gas fuel L within the drum 10 is lowered to the first position (YES in S207), the valve control means 46 closes the gas pipeline valve 15 (S212), and the processing of Fig. 7 is stopped.

According to the processing shown in Fig. 7, during the time from the execution of S201 to the execution of S204, the pumping step is performed while the fuel pipeline valve 12 and the gas pipeline valve 15 are opened.

Then, S204 is performed, thereby closing the fuel pipeline valve 12 and the gas pipeline valve 15 for the initial heating step.

Until the liquefied gas fuel L stored in the interior 10b of the drum 10 is reduced to the first amount, any of the following processings 1, 2, 3, and 4 is performed by the determination as NO in S207. Then, the processing returns to S207.

Processing 1 for performing the heating step: determination is made in S207 while the valves 12 and 15 are closed; NO in S207 → NO in S208 → NO in S210.

Processing 2 for starting the discharge step: determination is made in S207 while the valves 12 and 15 are closed; NO in S207 → YES in S208 → S209.

Processing 3 for continuing the discharge step: determination is made in S207 while the valve 12 is closed and the valve 15 is opened; NO in S207 → NO in S208 → NO in S210.

Processing 4 for stopping the discharge step: determination is made in S207 while the valve 12 is closed and the valve 15 is opened; NO in S207 → NO in S208 → YES in S210 → S211.

Until the liquid level position of the liquefied gas fuel L within the drum 10 is lowered to the first position, and until the air pressure in the interior 10b of the drum 10 reaches the upper limit value, processing 1 (determination is made in S207 while the valves 12 and 15 are closed; NO in S207 → NO in S208 → NO in S210) is repeated, thereby performing the heating step while the fuel pipeline valve 12 and the gas pipeline valve 15 are closed.

Until the liquid level position of the liquefied gas fuel L within the drum 10 is lowered to the first position, and when the air pressure in the interior 10b of the drum 10 reaches the upper limit value, processing 2 (determination is made in S207 while the valves 12 and 15 are closed; NO in S207 → YES in S208 → S209) is executed, thereby starting the discharge step while the fuel pipeline valve 12 is closed and the gas pipeline valve 15 is opened.

Until the liquid level position of the liquefied gas fuel L within the drum 10 is lowered to the first position, and during the time in which the air pressure in the interior 10b of the drum 10 is reduced from the upper limit value to the lower limit value, processing 3 (determination is made in S207 while the valve 12 is closed and the valve 15 is opened; NO in S207 → NO in S208 → NO in S210) is repeated, thereby continuing the discharge step while the fuel pipeline valve 12 is closed and the gas pipeline valve 15 is opened.

Until the liquid level position of the liquefied gas fuel L within the drum 10 is lowered to the first position, and when the air pressure in the interior 10b of the drum 10 is reduced to the lower limit value, processing 4 (determination is made in S207 while the valve 12 is closed and the valve 15 is opened; NO in S207 → NO in S208 → YES in S210 → S211) is executed, thereby stopping the discharge step while the fuel pipeline valve 12 and the gas pipeline valve 15 are closed.

Then, during the time in which the liquid level position of the liquefied gas fuel L within the drum 10 is not lowered to the first position, processings 1 to 4 are repeated, thereby repeating the heating discharge step (Fig. 3) in which the discharge step is performed after the heating step.

Then, when the liquid level position of the liquefied gas fuel L within the drum 10 is lowered to the first position, determination is made as YES in S207, the gas pipeline valve 15 is closed in S212, and the processing shown in Fig. 7 is stopped. When the control device 41 receives a fuel pumping start signal from one of the engine 5 and the fuel supply system **6,** the processing shown in Fig. 7 is started again.

The processing shown in Fig. 7 may be executed on the condition that the signal transmissions shown in e and f below are performed.

e: When pumping of the liquefied gas fuel L present in both of the engine 5 and the fuel supply system 6 to the interior 10b of the drum 10 is started, a fuel pumping start signal is transmitted to the control device 41 simultaneously from both of the engine 5 and the fuel supply system 6.
f: When pumping of the liquefied gas fuel L present in both of the engine 5 and the fuel supply system 6 to the interior 10b of the drum 10 is stopped, a fuel pumping stop signal is transmitted to the control device 41 simultaneously from both of the engine 5 and the fuel supply system 6.

When the above e and f are used as the execution condition of the processing of Fig. 7, upon reception of a fuel pumping start signal by the control device 41 from both of the engine 5 and the fuel supply system 6, the valve control means 46 opens the first and second fuel pipeline valves 12A and 12B, and the gas pipeline valve 15 (S201). Then, upon reception of a fuel pumping stop signal by the control device 41 from the sender of the fuel pumping start signal (both of the engine 5 and the fuel supply system 6) in S201, the position determining means 42 upon reception of a stop signal determines, based on the measured value of the fuel sensor 40, whether the liquid level position of the liquefied gas fuel L stored in the interior 10b of the drum is lower than the first position (S202). Then, when determination is made as NO in S202, the valve control means 46 closes the first and second fuel pipeline valves 12A and 12B, and the gas pipeline valve 15 (S204). Further, when determination is made as YES in S202, the position determining means 42 upon reception of a stop signal outputs an error signal indicating that the liquid level position of the liquefied gas fuel L within the drum 10 is lower than the first position (S205), and the valve control means 26 closes the first and second fuel pipeline valves 12A and 12B, and the gas pipeline valve 15 (S206). S207 to S212 are the same processings as those described above.

Moreover, the method for discharging vent gas G of the present invention can be such that a pumping step is performed until the liquid level position (height) of the liquefied gas fuel L stored in the interior 10b of the drum 10 reaches a second position, a heating discharge step is performed until the liquid level position (height) of the liquefied gas fuel L stored in the interior 10b of the drum 10 is reduced from the second position to a third position, the heating discharge step is suspended when the liquid level position (height) of the liquefied gas fuel L stored in the interior 10b of the drum 10 reaches the third position, and the step proceeds to the pumping step. In this way, it is possible to prevent supplying excessive liquefied gas fuel L to the interior 10b of the drum 10, and it is also possible to avoid wasteful heating (heating with no liquid inside) by the heating means 13 in the absence of the liquefied gas fuel L in the interior 10b of the drum 10. In the above case, the pipeline system 1 is provided with a fuel sensor 40 that measures the liquid level position of the liquefied gas fuel L stored in the interior 10b of the drum 10. The time in which the amount of the liquefied gas fuel L stored in the interior 10b of the drum 10 reaches the second position or the third position is specified based on the measured value of the fuel sensor 40.

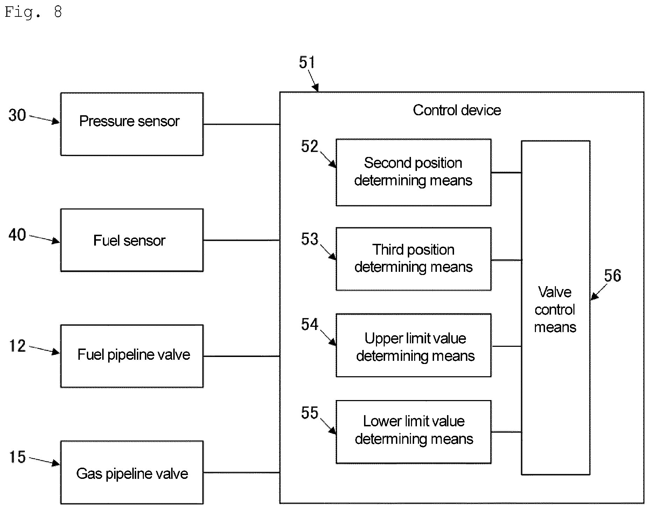

When the method for discharging vent gas G of the present invention is as described above, in order to automatically open and close the fuel pipeline valve 12 and the gas pipeline valve 15, the marine vessel 2 may be provided with a control device 51 (Fig. 8) that performs processing based on the measured values of the pressure sensor 30 and fuel sensor 40 provided in the pipeline system 1.

The control device 51 has, as means (functional block) for controlling the fuel pipeline valve 12 and the gas pipeline valve 15, a second position determining means 52, a third position determining means 53, an upper limit value determining means 54, a lower limit value determining means 55, and a valve control means 56 (Fig. 8). These means 52, 53, 54, 55, and 56 may be realized in a hardware manner; however, these means may also be realized in a software manner in such a manner that the processor of the control device 51 reads a program into memory and executes it.

When the means 52, 53, 54, 55, and 56 shown in Fig. 8 are realized in a hardware manner, the control device 51 includes, for example, a relay circuit, a pressure switch is used as the pressure sensor 30, and open/close valves with a drive source that utilizes hydraulic pressure or air pressure are used as the fuel pipeline valve 12 and the gas pipeline valve 15.

When the means 52, 53, 54, 55, and 56 shown in Fig. 8 are realized in a software manner, for example, the control device 51 is a device including a programmable logic controller (PLC), and a pressure transmitter is used as the pressure sensor 30. Alternatively, a computer including CPU, ROM, and RAM is used as the control device 51.

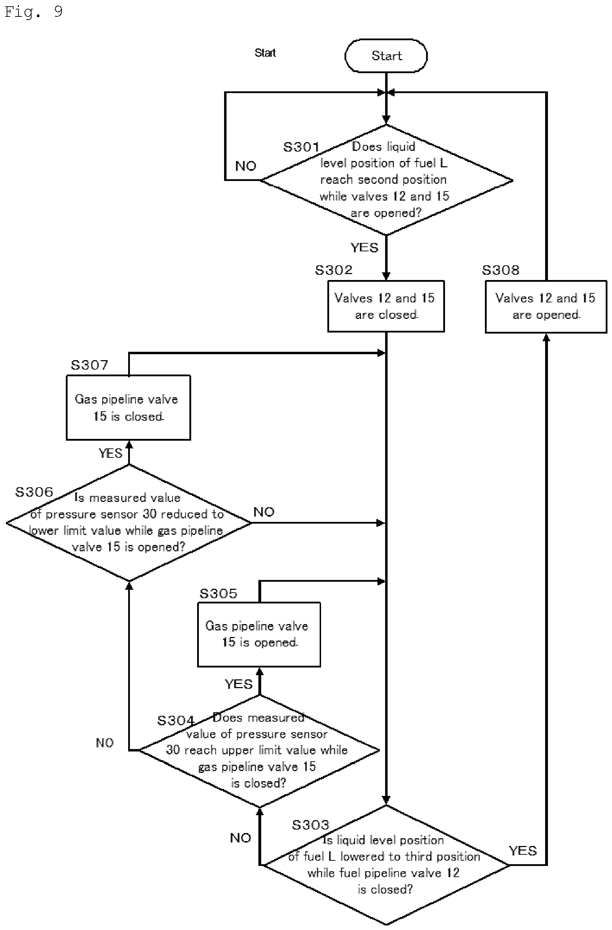

Fig. 9 is a flowchart of processing performed by the control device 51.

The processing shown in Fig. 9 is started in response to the opening of the fuel pipeline valve 12 and the gas pipeline valve 15 in order to perform the pumping step. Opening the fuel pipeline valve 12 means that one or both of the first and second fuel pipeline valves 12A and 12B is opened.

The second position determining means 52 determines whether the liquid level position of the liquefied gas fuel L stored in the interior 10b of the drum 10 reaches the second position, while the fuel pipeline valve 12 and the gas pipeline valve 15 are opened (S301). This processing is performed based on the measured value of the fuel sensor 40. During the time in which it is not determined that the liquid level position of the liquefied gas fuel L within the drum 10 reaches the second position (NO in S301), the fuel pipeline valve 12 and the gas pipeline valve 15 are kept open.

When the second position determining means 52 determines that the liquid level position of the liquefied gas fuel L within the drum 10 reaches the second position (YES in S301), the valve control means 56 closes the fuel pipeline valve 12 and the gas pipeline valve 15 (S302). Closing the fuel pipeline valve 12 in S302 means that one or both of the first and second fuel pipeline valves 12A and 12B that has been opened before S302 is closed (when one of the first and second fuel pipeline valves 12A and 12B has been closed before S302, the one of the first and second fuel pipeline valves 12A and 12B is kept closed).

The third position determining means 53 determines whether the liquid level position of the liquefied gas fuel L within the drum 10 is lowered to the third position, while the fuel pipeline valve 12 is closed (S303). This processing is also performed based on the measured value of the fuel sensor 40.

When the third position determining means 53 does not determine that the liquid level position of the liquefied gas fuel L within the drum 10 is reduced to the third position (NO in S303), the upper limit value determining means 54 determines whether the measured value of the pressure sensor 30 reaches an upper limit value equal to or higher than atmospheric pressure, while the gas pipeline valve 15 is closed (S304).

When the upper limit value determining means 54 determines that the measured value of the pressure sensor 30 reaches the upper limit value while the gas pipeline valve 15 is closed (YES in S304), the valve control means 56 opens the gas pipeline valve 15 (S305).

When the upper limit value determining means 54 does not determine that the measured value of the pressure sensor 30 reaches the upper limit value while the gas pipeline valve 15 is closed (NO in S304), the lower limit value determining means 54 determines whether the measured value of the pressure sensor 30 is reduced to a lower limit value that is lower than the upper limit value and equal to or higher than atmospheric pressure, while the gas pipeline valve 15 is opened (S306).

By using the opening and closing of the gas pipeline valve 15 as the determination condition, the lower limit value determining means 55 makes determination separately when the measured value of the pressure sensor 30 (air pressure within the drum 10) is increased to the lower limit value while the gas pipeline valve 15 is closed, and when the measured value of the pressure sensor 30 (air pressure within the drum 10) is reduced to the lower limit value while the gas pipeline valve 15 is opened. That is, when the measured value of the pressure sensor 30 is increased to the lower limit value (when reaching the lower limit value from a value lower than the lower limit value), the lower limit value determining means 55 determines NO because the gas pipeline valve 15 is not opened. Further, when the measured value of the pressure sensor 30 is reduced to the lower limit value (when reaching the lower limit value from a value higher than the lower limit value), the lower limit value determining means 55 determines YES because the gas pipeline valve 15 is opened.

When the lower limit value determining means 55 determines that the measured value of the pressure sensor 30 is reduced to the lower limit value while the gas pipeline valve 15 is opened (YES in S306), the valve control means 56 closes the gas pipeline valve 15 (S307).

Then, after the valve control means 56 opens the gas pipeline valve 15 in S305, when the lower limit value determining means 55 determines that the measured value of the pressure sensor 30 is not reduced to the lower limit value in S306 (NO in S306), or after the valve control means 56 closes the gas pipeline valve 15 in S307, the processing returns to determination by the third position determining means 53 in S303.

Then, when the third position determining means 53 determines that the liquid level position of the liquefied gas fuel L within the drum 10 is reduced to the third position (YES in S303), the valve control means 56 opens the fuel pipeline valve 12 and the gas pipeline valve 15 (S308). Thereafter, the processing returns to determination by the second position determining means 52 in S301.

According to the processing shown in Fig. 9, determination is made as NO in S301 until the liquid level position of the liquefied gas fuel L within the drum 10 reaches the second position, thereby performing the pumping step while the fuel pipeline valve 12 and the gas pipeline valve 15 are opened.

Then, when the liquid level position of the liquefied gas fuel L within the drum 10 reaches the second position, determination is made as YES in S301, and S302 is performed, thereby closing the fuel pipeline valve 12 and the gas pipeline valve 15 for the initial heating step.

After S302 is performed, during the time in which the liquid level position of the liquefied gas fuel L within the drum 10 is reduced from the second position to the third position, any of the following processings 1, 2, 3, and 4 is performed. Then, the processing returns to S303.

Processing 1 for performing the heating step: determination is made in S303 while the valves 12 and 15 are closed; NO in S303 → NO in S304 → NO in S306.

Processing 2 for starting the discharge step: determination is made in S303 while the valves 12 and 15 are closed; NO in S303 → YES in S304 → S305.

Processing 3 for continuing the discharge step: determination is made in S303 while the valve 12 is closed and the valve 15 is opened; NO in S303 → NO in S304 → NO in S306.

Processing 4 for stopping the discharge step: determination is made in S303 while the valve 12 is closed and the valve 15 is opened; NO in S303 → NO in S304 → YES in S306 → S307.

During the time in which the liquid level position of the liquefied gas fuel L within the drum 10 is lowered from the second position to the third position, and until the air pressure in the interior 10b of the drum 10 reaches the upper limit value, processing 1 (determination is made in S303 while the valves 12 and 15 are closed; NO in S303 → NO in S304 → NO in S306) is repeated, thereby performing the heating step while the fuel pipeline valve 12 and the gas pipeline valve 15 are closed.

During the time in which the liquid level position of the liquefied gas fuel L within the drum 10 is lowered from the second position to the third position, and when the air pressure in the interior 10b of the drum 10 reaches the upper limit value, processing 2 (determination is made in S303 while the valves 12 and 15 are closed; NO in S303 → YES in S304 → S305) is executed, thereby opening the gas pipeline valve 15 while the fuel pipeline valve 12 is closed, and starting the discharge step.

During the time in which the liquid level position of the liquefied gas fuel L within the drum 10 is lowered from the second position to the third position, and during the time in which the air pressure in the interior 10b of the drum 10 is reduced from the upper limit value to the lower limit value, processing 3 (determination is made in S303 while the valve 12 is closed and the valve 15 is opened; NO in S303 → NO in S304 → NO in S306) is repeated, thereby continuing the discharge step, while the fuel pipeline valve 12 is closed and the gas pipeline valve 15 is opened.

During the time in which the liquid level position of the liquefied gas fuel L within the drum 10 is lowered from the second position to the third position, and when the air pressure in the interior 10b of the drum 10 is reduced to the lower limit value, processing 4 (determination is made in S303 while the valve 12 is closed and the valve 15 is opened; NO in S303 → NO in S304 → YES in S306 → S307) is executed, thereby stopping the discharge step, while the fuel pipeline valve 12 and the gas pipeline valve 15 are closed.

Thereafter, processings 1 to 4 are repeated during the time in which the liquid level position of the liquefied gas fuel L within the drum 10 is not lowered to the third position, thereby repeating the heating discharge step (Fig. 3) in which the discharge step is performed after the heating step.

Then, when the liquid level position of the liquefied gas fuel L within the drum 10 is lowered to the third position, determination is made as YES in S303, the fuel pipeline valve 12 and the gas pipeline valve 15 are opened in S308, and the processing returns to S301, thereby suspending the heating discharge step and restarting the pumping step.

In the above example, one engine 5 is provided in the marine vessel 2; however, two or more engines 5 may be provided in the marine vessel 2. In that case, each engine 5 may be provided with one fuel supply system 6, or the plural engines 5 may be provide with one fuel supply system 6. In the above case, the liquefied gas fuel L present in each engine 5 and each fuel supply system 6 is guided through the fuel pipeline to the interior 10b of the drum 10, whereby the liquefied gas fuel L present in each engine 5 and each fuel supply system 6 can be vaporized and discharged from the vent post 3 at a high speed.

Further, the liquefied gas fuel L present in a device or equipment other than the engine 5 and the fuel supply system 6 may be guided through the fuel pipeline to the interior 10b of the drum 10. In this way, the liquefied gas fuel L present in the device or equipment can be vaporized and discharged from the vent post 3 at a high speed.

### Reference Signs List

1. Pipeline system
2. Marine vessel
3. Vent post
5. Engine
6. Fuel supply system
10. Drum
10a. Wall of drum
10b. Interior of drum
11. Fuel pipeline
12. Fuel pipeline valve
12A. First fuel pipeline valve
12B. Second fuel pipeline valve
13. Heating means
14. Gas pipeline
15. Gas pipeline valve
20. System fuel pipeline
21. Engine fuel pipeline
30. Pressure sensor
40. Fuel sensor
31, 41, 51. Control device
42. Position determining means upon reception of a stop signal
32, 44, 54. Upper limit value determining means
33, 45, 55. Lower limit value determining means
34, 46, 56. Valve control means
43. First position determining means
52. Second position determining means
53. Third position determining means

## Claims

1. A pipeline system (1) provided in a marine vessel (2) that discharges vent gas vaporized from liquefied gas fuel from a vent post (3), the pipeline system comprising:
a drum (10) having an interior (10b) surrounded by a wall (10a);
a fuel pipeline (11) for guiding the liquefied gas fuel tc the interior (10b) of the drum;
a fuel pipeline valve (12, 12A, 12B) opening and closing the fuel pipeline (11);
a heating means (13) for heating the liquefied gas fuel guided to the interior (10b) of the drum to thereby generate the vent gas;
a gas pipeline (14) for guiding the vent gas present in the interior (10b) of the drum to the vent post (3); and
a gas pipeline valve (15) opening and closing the gas pipeline (14).

2. The pipeline system (1) according to claim 1, wherein the marine vessel (2) supplies the liquefied gas fuel present in a fuel supply system (6) to an engine,
the fuel pipeline (11) configures a system fuel pipeline (20) for guiding the liquefied gas fuel present in the fuel supply system (6) to the interior (10b) of the drum, and an engine fuel pipeline (21) for guiding the liquefied gas fuel present in the engine to the interior (10b) of the drum, and
a first fuel pipeline valve (12A) opening and closing the system fuel pipeline (20), and a second fuel pipeline valve (12B) opening and closing the engine fuel pipeline (21) are provided as the fuel pipeline valve (12, 12A, 12B).

3. The pipeline system according to claim 1 or 2, wherein the wall (10a) of the drum is made of carbon steel.

4. A method for discharging vent gas using the pipeline system (1) according to any one of claims 1 to 3, the method comprising:
a pumping step; and
a heating discharge step performed after the pumping step,
wherein in the pumping step, liquefied gas fuel is pumped to the interior (10b) of the drum through the fuel pipeline (11) while the fuel pipeline valve (12, 12A, 12B) and the gas pipeline valve (15) are opened; and
in the heating discharge step,
a heating step is performed to heat the liquefied gas fuel present in the interior (10b) of the drum by a heating means (13) tc generate vent gas, while the fuel pipeline valve (12, 12A, 12B) and the gas pipeline valve (15) are closed, until the air pressure in the interior (10b) of the drum is increased to an upper limit value equal to or higher than atmospheric pressure, and
a discharge step is performed to open the gas pipeline valve (15) when the air pressure in the interior (10b) of the drum reaches the upper limit value, and close the gas pipeline valve (15) when the air pressure in the interior (10b) of the drum is reduced to a lower limit value equal to or higher than atmospheric pressure, thereby guiding the vent gas present in the interior (10b) of the drum to a vent post (3) and discharging it from the vent post (3) during the time in which the air pressure in the interior (10b) of the drum is reduced from the upper limit value to the lower limit value.

5. The vent gas discharge method according to claim 4, wherein the pumping step is performed until the liquid level position of the liquefied gas fuel stored in the interior (10b) of the drum is higher than a first position, and the heating discharge step is performed until the liquid level position of the liquefied gas fuel stored in the interior (10b) of the drum is lowered to the first position.

6. The vent gas discharge method according to claim 4, wherein the pumping step is performed until the liquid level position of the liquefied gas fuel stored in the interior (10b) of the drum reaches a second position, the heating discharge step is performed until the liquid level position of the liquefied gas fuel stored in the interior (10b) of the drum is lowered from the second position to a third position, and when the liquid level position of the liquefied gas fuel stored in the interior (10b) of the drum reaches the third position, the step proceeds to the pumping step.

7. The pipeline system (1) according to any one of claims 1 to 3, further comprising a control device (31) that controls the gas pipeline valve (15),
the pipeline system further comprising a pressure sensor (30) that measures the air pressure in the interior (10b) of the drum,
the control device having an upper limit value determining means (32) , a lower limit value determining means (33) , and a valve control means as means for controlling the gas pipeline valve (15) while the fuel pipeline valve (12, 12A, 12B) is closed,
the upper limit value determining means determining (S101) whether a measured value of the pressure sensor reaches an upper limit value equal to or higher than atmospheric pressure while the gas pipeline valve is closed,
when the upper limit value determining means determines that the measured value of the pressure sensor reaches the upper limit value while the gas pipeline valve is closed, the valve control means opening (S102) the gas pipeline valve,
the lower limit value determining means determining (S103) whether the measured value of the pressure sensor is reduced to a lower limit value equal to or higher than atmospheric pressure while the gas pipeline valve is opened,
when the lower limit value determining means determines that the measured value of the pressure sensor is reduced to the lower limit value while the gas pipeline valve is opened, the valve control means closing (S104) the gas pipeline valve, and
after the valve control means closes the gas pipeline valve, processing returning to determination (S101) by the upper limit value determining means.

8. The pipeline system (1) according to claim 2, further comprising a control device (41) that controls the fuel pipeline valve (12, 12A, 12B) and the gas pipeline valve (15),
the pipeline system further comprising a pressure sensor (30) that measures the air pressure in the interior (10b) of the drum, and a fuel sensor (40) that measures the liquid level position of the liquefied gas fuel stored in the interior (10b) of the drum,
the control device having a position determining means (42) upon reception of a stop signal, a first position determining means (43), an upper limit value determining means (44), a lower limit value determining means (45) , and a valve control means (46),
upon reception of a fuel pumping start signal by the control device from one of the engine and the fuel supply system, the valve control means opening (S201) the fuel pipeline valve and the gas pipeline valve,
upon reception of a fuel pumping stop signal by the control device from a sender of the fuel pumping start signal, the position determining means upon reception of a stop signal determining (S202), based on a measured value of the fuel sensor, whether the liquid level position of the liquefied gas fuel stored in the interior of the drum is lower than a first position,
when the position determining means upon reception of a stop signal does not determine that the liquid level position of the liquefied gas fuel stored in the interior of the drum is lower than the first position, the valve control means closing (S204) the fuel pipeline valve and the gas pipeline valve,
the first position determining means determining (S207), based on the measured value of the fuel sensor, whether the liquid level position of the liquefied gas fuel stored in the interior of the drum is lower than the first position, while the fuel pipeline valve and the gas pipeline valve are closed,
when the first position determining means does not determine that the liquid level position of the liquefied gas fuel stored in the interior of the drum is lower than the first position, the upper limit value determining means determining (S208) whether a measured value of the pressure sensor reaches an upper limit value equal to or higher than atmospheric pressure, while the gas pipeline valve is closed,
when the upper limit value determining means determines that the measured value of the pressure sensor reaches the upper limit value while the gas pipeline valve is closed, the valve control means opening (S209) the gas pipeline valve,
when the upper limit value determining means does not determine that the measured value of the pressure sensor reaches the upper limit value, while the gas pipeline valve is closed, the lower limit value determining means determining (S210) whether the measured value of the pressure sensor is reduced to a lower limit value equal to or higher than atmospheric pressure, while the gas pipeline valve is opened,
when the lower limit value determining means determines that the measured value of the pressure sensor is reduced to the lower limit value while the gas pipeline valve is opened, the valve control means closing (S211) the gas pipeline valve,
after the valve control means opens the gas pipeline valve, or when the lower limit value determining means determines that the measured value of the pressure sensor is not reduced to the lower limit value, or after the valve control means closes the gas pipeline valve, processing returning to determination (S207) by the first position determining means, and
when the first position determining means determines that the liquid level position of the liquefied gas fuel stored in the interior of the drum is lower than the first position, the valve control means closing (S212) the gas pipeline valve.

9. The pipeline system (1) according to any one of claims 1 to 3, further comprising a control device (51) that controls the fuel pipeline valve (12, 12A, 12B) and the gas pipeline valve (15),
the pipeline system further comprising a pressure sensor (30) that measures the air pressure in the interior (10b) of the drum, and a fuel sensor (40) that measures the amount of the liquefied gas fuel stored in the interior (10b) of the drum,
the control device having a second position determining means (52), a third position determining means (53), an upper limit value determining means (54), a lower limit value determining means (55), and a valve control means (56),
the second position determining means determining (S301) whether the liquid level position of the liquefied gas fuel stored in the interior of the drum reaches a second position, while the fuel pipeline valve and the gas pipeline valve are opened,
when the second position determining means determines that the liquid level position of the liquefied gas fuel stored in the interior of the drum reaches the second position, the valve control means closing (S302) the fuel pipeline valve and the gas pipeline valve,
the third position determining means determining (S303) whether the liquid level position of the liquefied gas fuel stored in the interior of the drum is lowered to a third position, while the fuel pipeline valve is closed,
when the third position determining means does not determine that the liquid level position of the liquefied gas fuel stored in the interior of the drum is lowered to the third position, the upper limit value determining means determining (S304) whether a measured value of the pressure sensor reaches an upper limit value equal to or higher than atmospheric pressure, while the gas pipeline valve is closed,
when the upper limit value determining means determines that the measured value of the pressure sensor reaches the upper limit value while the gas pipeline valve is closed, the valve control means opening (S305) the gas pipeline valve,
when the upper limit value determining means does not determine that the measured value of the pressure sensor reaches the upper limit value while the gas pipeline valve is closed, the lower limit value determining means determining (S306) whether the measured value of the pressure sensor is reduced to a lower limit value equal to or higher than atmospheric pressure, while the gas pipeline valve is opened,
when the lower limit value determining means determines that the measured value of the pressure sensor is reduced to the lower limit value while the gas pipeline valve is opened, the valve control means closing (S307) the gas pipeline valve,
after the valve control means opens the gas pipeline valve, or when the lower limit value determining means determines that the measured value of the pressure sensor is not reduced to the lower limit value, or after the valve control means closes the gas pipeline valve, processing returning to determination (S301) by the third position determining means, and
when the third position determining means determines that the liquid level position of the liquefied gas fuel stored in the interior of the drum is lowered to the third position, the valve control means opening (S308) the gas pipeline valve, and then processing returning to determination (S301) by the second position determining means.

## Patentansprüche

1. Ein Leitungssystem (1), das in einem Schiff (2) vorgesehen ist, das aus Flüssiggaskraftstoff verdampftes Entlüftungsgas von einer Entlüftungssäule (3) abführt, das Leitungssystem umfassend:
ein Behälter (10) mit einem Innenraum (10b), der von einer Wand (10a) umgeben ist;
eine Kraftstoffleitung (11) zum Leiten des Flüssiggaskraftstoffs in den Innenraum (10b) des Behälters;
ein Kraftstoffleitungsventil (12, 12A, 12B), das die Kraftstoffleitung (11) öffnet und schließt;
eine Heizvorrichtung (13) zum Erhitzen des in den Innenraum (10b) des Behälters geleiteten Flüssiggaskraftstoffs, um dadurch das Entlüftungsgas zu erzeugen;
eine Gasleitung (14), um das im Innenraum (10b) des Behälters vorhandene Entlüftungsgas zur Entlüftungssäule (3) zu leiten; und
ein Gasleitungsventil (15), das die Gasleitung (14) öffnet und schließt.

2. Das Leitungssystem (1) nach Anspruch 1, wobei das Schiff (2) den in einem Kraftstoffversorgungssystem (6) vorhandenen Flüssiggaskraftstoff an einen Motor liefert,
die Kraftstoffleitung (11) eine Systemkraftstoffleitung (20) zum Leiten des im Kraftstoffversorgungssystem (6) vorhandenen Flüssiggaskraftstoffs in den Innenraum (10b) des Behälters und eine Motorkraftstoffleitung (21) zum Leiten des im Motor vorhandenen Flüssiggaskraftstoffs in den Innenraum (10b) des Behälters bildet, und
ein erstes Kraftstoffleitungsventil (12A), das die Systemkraftstoffleitung (20) öffnet und schließt, und ein zweites Kraftstoffleitungsventil (12B), das die Motorkraftstoffleitung (21) öffnet und schließt, als das Kraftstoffleitungsventil (12, 12A, 12B) vorgesehen sind.

3. Das Leitungssystem nach Anspruch 1 oder 2, wobei die Wand (10a) des Behälters aus Kohlenstoffstahl besteht.

4. Ein Verfahren zum Abführen von Entlüftungsgas unter Verwendung des Leitungssystems (1) nach einem der Ansprüche 1 bis 3, das Verfahren umfassend:
einen Pumpschritt; und
einen Erhitzungsabführungsschritt, der nach dem Pumpschritt durchgeführt wird,
wobei in dem Pumpschritt Flüssiggaskraftstoff durch die Kraftstoffleitung (11) in den Innenraum (10b) des Behälters gepumpt wird, während das Kraftstoffleitungsventil (12, 12A, 12B) und das Gasleitungsventil (15) geöffnet sind; und
in dem Erhitzungsabführungsschritt,
ein Erhitzungsschritt durchgeführt wird, um den im Innenraum (10b) des Behälters vorhandenen Flüssiggaskraftstoff durch eine Heizvorrichtung (13) zu erhitzen, um Entlüftungsgas zu erzeugen, während das Kraftstoffleitungsventil (12, 12A, 12B) und das Gasleitungsventil (15) geschlossen sind, bis der Luftdruck im Innenraum (10b) des Behälters auf einen oberen Grenzwert erhöht wird, der gleich dem oder höher als der Atmosphärendruck ist, und
ein Abführungsschritt durchgeführt wird, um das Gasleitungsventil (15) zu öffnen, wenn der Luftdruck im Innenraum (10b) des Behälters den oberen Grenzwert erreicht, und das Gasleitungsventil (15) zu schließen, wenn der Luftdruck im Innenraum (10b) des Behälters auf einen unteren Grenzwert reduziert wird, der gleich dem oder höher als der Atmosphärendruck ist, wodurch das im Innenraum (10b) des Behälters vorhandene Entlüftungsgas zu einer Entlüftungssäule (3) geleitet und während der Zeit, in der der Luftdruck im Innenraum (10b) des Behälters von dem oberen Grenzwert auf den unteren Grenzwert reduziert wird, aus der Entlüftungssäule (3) abgeführt wird.

5. Das Entlüftungsgasabführverfahren nach Anspruch 4, wobei der Pumpschritt durchgeführt wird, bis die Flüssigkeitspegelposition des im Innenraum (10b) des Behälters gelagerten Flüssiggaskraftstoffs höher als eine erste Position ist, und der Erhitzungsabführungsschritt durchgeführt wird, bis die Flüssigkeitspegelposition des im Innenraum (10b) des Behälters gelagerten Flüssiggaskraftstoffs auf die erste Position abgesenkt ist.

6. Das Entlüftungsgasabführverfahren nach Anspruch 4, wobei der Pumpschritt durchgeführt wird, bis die Flüssigkeitspegelposition des im Innenraum (10b) des Behälters gelagerten Flüssiggaskraftstoffs eine zweite Position erreicht, der Erhitzungsabführungsschritt durchgeführt wird, bis die Flüssigkeitspegelposition des im Innenraum (10b) des Behälters gelagerten Flüssiggaskraftstoffs von der zweiten Position auf eine dritte Position abgesenkt wird, und wenn die Flüssigkeitspegelposition des im Innenraum (10b) des Behälters gelagerten Flüssiggaskraftstoffs die dritte Position erreicht, der Schritt mit dem Pumpschritt fortgesetzt wird.

7. Das Leitungssystem (1) nach einem der Ansprüche 1 bis 3, ferner eine Steuervorrichtung (31) umfassend, die das Gasleitungsventil (15) steuert,
wobei das Leitungssystem ferner einen Drucksensor (30) umfasst, der den Luftdruck im Innenraum (10b) des Behälters misst,
wobei die Steuervorrichtung ein Mittel (32) zur Bestimmung des oberen Grenzwertes, ein Mittel (33) zur Bestimmung des unteren Grenzwertes, und ein Ventilsteuermittel als Mittel zur Steuerung des Gasleitungsventils (15) aufweist, während das Kraftstoffleitungsventil (12, 12A, 12B) geschlossen ist,
wobei das Mittel zur Bestimmung des oberen Grenzwertes bestimmt (S101), ob ein gemessener Wert des Drucksensors einen oberen Grenzwert erreicht, der gleich dem oder höher als der Atmosphärendruck ist, während das Gasleitungsventil geschlossen ist,
wenn das Mittel zur Bestimmung des oberen Grenzwerts bestimmt, dass der gemessene Wert des Drucksensors den oberen Grenzwert erreicht, während das Gasleitungsventil geschlossen ist, öffnet das Ventilsteuermittel das Gasleitungsventil (S102),
wobei das Mittel zur Bestimmung des unteren Grenzwerts bestimmt (S103), ob der gemessene Wert des Drucksensors auf einen unteren Grenzwert reduziert wird, der gleich dem oder höher als der Atmosphärendruck ist, während das Gasleitungsventil geöffnet ist,
wenn das Mittel zur Bestimmung des unteren Grenzwerts bestimmt, dass der gemessene Wert des Drucksensors auf den unteren Grenzwert reduziert ist, während das Gasleitungsventil geöffnet ist, schließt das Ventilsteuermittel das Gasleitungsventil (S104), und
nachdem das Ventilsteuermittel das Gasleitungsventils geschlossen hat, kehrt der Ablauf zur Bestimmung (S101) durch die Mittel zur Bestimmung des oberen Grenzwertes zurück.

8. Das Leitungssystem (1) nach Anspruch 2, ferner eine Steuervorrichtung (41) umfassend, die das Kraftstoffleitungsventil (12, 12A, 12B) und das Gasleitungsventil (15) steuert,
wobei das Leitungssystem ferner einen Drucksensor (30), der den Luftdruck im Innenraum (10b) des Behälters misst, und einen Kraftstoffsensor (40), der die Flüssigkeitspegelposition des im Innenraum (10b) des Behälters gelagerten Flüssiggaskraftstoffs misst, umfasst,
wobei die Steuervorrichtung ein Positionsbestimmungsmittel (42) bei Empfang eines Stoppsignals, ein erstes Positionsbestimmungsmittel (43), ein Mittel (44) zur Bestimmung des oberen Grenzwerts, ein Mittel (45) zur Bestimmung des unteren Grenzwerts, und ein Ventilsteuermittel (46) aufweist,
wobei beim Empfang eines Kraftstoffpump-Startsignals durch die Steuervorrichtung von einem von dem Motor und dem Kraftstoffversorgungssystem, das Ventilsteuermittel das Kraftstoffleitungsventil und das Gasleitungsventil öffnet (S201),
wobei beim Empfang eines Kraftstoffpump-Stoppsignals durch die Steuervorrichtung von einem Sender des Kraftstoffpump-Startsignals, das Positionsbestimmungsmittel bei Empfang eines Stoppsignals, auf der Grundlage eines gemessenen Wertes des Kraftstoffsensors, bestimmt (S202), ob die Flüssigkeitspegelposition des im Innenraum des Behälters gelagerten Flüssiggaskraftstoffs niedriger als eine erste Position ist,
wenn das Positionsbestimmungsmittel bei Empfang eines Stoppsignals nicht bestimmt, dass die Flüssigkeitspegelposition des im Innenraum des Behälters gelagerten Flüssiggaskraftstoffs niedriger als die erste Position ist, schließt (S204) das Ventilsteuermittel das Kraftstoffleitungsventil und das Gasleitungsventil,
wobei das erste Positionsbestimmungsmittel auf der Grundlage des gemessenen Wertes des Kraftstoffsensors bestimmt (S207), ob die Flüssigkeitspegelposition des im Innenraum des Behälters gelagerten Flüssiggaskraftstoffs niedriger als die erste Position ist, während das Kraftstoffleitungsventil und das Gasleitungsventil geschlossen sind,
wenn das erste Positionsbestimmungsmittel nicht bestimmt, dass die Flüssigkeitspegelposition des im Innenraum des Behälters gelagerten Flüssiggaskraftstoffs niedriger als die erste Position ist, das Mittel zur Bestimmung des oberen Grenzwerts bestimmt (S208), ob ein gemessener Wert des Drucksensors einen oberen Grenzwert erreicht, der gleich dem oder höher als der Atmosphärendruck ist, während das Gasleitungsventil geschlossen ist,
wenn das Mittel zur Bestimmung des oberen Grenzwerts bestimmt, dass der gemessene Wert des Drucksensors den oberen Grenzwert erreicht, während das Gasleitungsventil geschlossen ist, öffnet (S209) das Ventilsteuermittel das Gasleitungsventil,
wenn das Mittel zur Bestimmung des oberen Grenzwerts nicht bestimmt, dass der gemessene Wert des Drucksensors den oberen Grenzwert erreicht, während das Gasleitungsventil geschlossen ist, das Mittel zur Bestimmung des unteren Grenzwerts bestimmt (S210), ob der gemessene Wert des Drucksensors auf einen unteren Grenzwert reduziert ist, der gleich dem oder höher als der Atmosphärendruck ist, während das Gasleitungsventil geöffnet ist,
wenn das Mittel zur Bestimmung des unteren Grenzwerts bestimmt, dass der gemessene Wert des Drucksensors auf den unteren Grenzwert reduziert ist, während das Gasleitungsventil geöffnet ist, schließt (S211) das Ventilsteuermittel das Gasleitungsventil,
nach dem Öffnen des Gasleitungsventils durch das Ventilsteuermittel, oder wenn das Mittel zur Bestimmung des unteren Grenzwerts bestimmt, dass der gemessene Wert des Drucksensors nicht auf den unteren Grenzwert reduziert ist, oder nach dem Schließen des Gasleitungsventils durch das Ventilsteuermittel, kehrt der Ablauf zur Bestimmung (S207) durch das erste Positionsbestimmungsmittel zurück, und
wenn das erste Positionsbestimmungsmittel bestimmt, dass die Flüssigkeitspegelposition des im Innenraum des Behälters gelagerten Flüssiggaskraftstoffs niedriger als die erste Position ist, schließt (S212) das Ventilsteuermittel das Gasleitungsventil.

9. Das Leitungssystem (1) nach einem der Ansprüche 1 bis 3, ferner eine Steuervorrichtung (51) umfassend, die das Kraftstoffleitungsventil (12, 12A, 12B) und das Gasleitungsventil (15) steuert,
wobei das Leitungssystem ferner einen Drucksensor (30), der den Luftdruck im Innenraum (10b) des Behälters misst, und einen Kraftstoffsensor (40), der die Menge des im Innenraum (10b) des Behälters gelagerten Flüssiggaskraftstoffs misst, umfasst,
wobei die Steuervorrichtung ein zweites Positionsbestimmungsmittel (52), ein drittes Positionsbestimmungsmittel (53), ein Mittel (54) zur Bestimmung des oberen Grenzwerts, ein Mittel (55) zur Bestimmung des unteren Grenzwerts, und ein Ventilsteuermittel (56) aufweist,
wobei das zweite Positionsbestimmungsmittel bestimmt (S301), ob die Flüssigkeitspegelposition des im Innenraum des Behälters gespeicherten Flüssiggaskraftstoffs eine zweite Position erreicht, während das Kraftstoffleitungsventil und das Gasleitungsventil geöffnet sind,
wenn das zweite Positionsbestimmungsmittel bestimmt, dass die Flüssigkeitspegelposition des im Innenraum des Behälters gelagerten Flüssiggaskraftstoffs die zweite Position erreicht, schließt (S302) das Ventilsteuermittel das Kraftstoffleitungsventil und das Gasleitungsventil,
wobei das dritte Positionsbestimmungsmittel bestimmt (S303), ob die Flüssigkeitspegelposition des im Innenraum des Behälters gelagerten Flüssiggaskraftstoffs auf eine dritte Position abgesenkt ist, während das Kraftstoffleitungsventil geschlossen ist,
wenn das dritte Positionsbestimmungsmittel nicht bestimmt, dass die Flüssigkeitspegelposition des im Innenraum des Behälters gelagerten Flüssiggaskraftstoffs auf die dritte Position abgesenkt ist, das Mittel zur Bestimmung des oberen Grenzwerts bestimmt (S304), ob ein gemessener Wert des Drucksensors einen oberen Grenzwert erreicht, der gleich dem oder höher als der Atmosphärendruck ist, während das Gasleitungsventil geschlossen ist,
wenn das Mittel zur Bestimmung des oberen Grenzwerts feststellt, dass der gemessene Wert des Drucksensors den oberen Grenzwert erreicht, während das Gasleitungsventil geschlossen ist, öffnet (S305) das Ventilsteuermittel das Gasleitungsventil,
wenn das Mittel zur Bestimmung des oberen Grenzwerts nicht feststellt, dass der gemessene Wert des Drucksensors den oberen Grenzwert erreicht, während das Gasleitungsventil geschlossen ist, das Mittel zur Bestimmung des unteren Grenzwerts bestimmt (S306), ob der gemessene Wert des Drucksensors auf einen unteren Grenzwert reduziert ist, der gleich dem oder höher als der Atmosphärendruck ist, während das Gasleitungsventil geöffnet ist,
wenn das Mittel zur Bestimmung des unteren Grenzwerts bestimmt, dass der gemessene Wert des Drucksensors auf den unteren Grenzwert reduziert ist, während das Gasleitungsventil geöffnet ist, schließt (S307) das Ventilsteuermittel das Gasleitungsventil,
nach dem Öffnen des Gasleitungsventils durch das Ventilsteuermittel, oder wenn das Mittel zur Bestimmung des unteren Grenzwerts bestimmt, dass der gemessene Wert des Drucksensors nicht auf den unteren Grenzwert reduziert ist, oder nach dem Schließen des Gasleitungsventils durch das Ventilsteuermittel, kehrt der Ablauf zur Bestimmung (S301) durch das dritte Positionsbestimmungsmittel zurück, und
wenn das dritte Positionsbestimmungsmittel bestimmt, dass die Flüssigkeitspegelposition des im Innenraum des Behälters gelagerten Flüssiggaskraftstoffs auf die dritte Position abgesenkt ist, öffnet (S308) das Ventilsteuermittel das Gasleitungsventil, und dann kehrt der Ablauf zur Bestimmung (S301) durch das zweite Positionsbestimmungsmittel zurück.

## Revendications

1. Un système de canalisation (1) prévu dans un navire (2) qui évacue, depuis un poteau d'évacuation (3), du gaz d'évent vaporisé provenant d'un combustible gazeux liquéfié, le système de canalisation comprenant :
un tambour (10) ayant un intérieur (10b) entouré par une paroi (10a) ;
une canalisation de combustible (11) pour guider le combustible gazeux liquéfié vers l'intérieur (10b) du tambour ;
une vanne (12, 12A, 12B) de canalisation de combustible, ouvrant et fermant la canalisation de combustible (11) ;
un moyen de chauffage (13) pour chauffer le combustible gazeux liquéfié guidé vers l'intérieur (10b) du tambour afin, ce faisant, de générer le gaz d'évent ;
une canalisation de gaz (14) pour guider vers le poteau d'évacuation (3) le gaz d'évent présent à l'intérieur (10b) du tambour ; et
une vanne (15) de canalisation de gaz, ouvrant et fermant la canalisation de gaz (14).

2. Le système de canalisation (1) selon la revendication 1, dans lequel le navire (2) alimente un moteur en combustible gazeux liquéfié présent dans un système d'alimentation en combustible (6),
la canalisation de combustible (11) configure une canalisation (20) de combustible système pour guider le combustible gazeux liquéfié présent dans le système d'alimentation en combustible (6) vers l'intérieur (10b) du tambour, et une canalisation (21) de combustible moteur pour guider le combustible gazeux liquéfié présent dans le moteur vers l'intérieur (10b) du tambour, et
une première vanne (12A) de canalisation de combustible ouvrant et fermant la canalisation (20) de combustible système, et une deuxième vanne (12B) de canalisation de combustible ouvrant et fermant la canalisation (21) de combustible moteur, sont prévues en tant que la vanne (12, 12A, 12B) de canalisation de combustible.

3. Le système de canalisation selon la revendication 1 ou la revendication 2, dans lequel la paroi (10a) du tambour est faite en acier au carbone.

4. Un procédé d'évacuation de gaz d'évent au moyen du système de canalisation (1) selon l'une quelconque des revendications 1 à 3, le procédé comprenant :
une étape de pompage ; et
une étape d'évacuation de chauffage mise en œuvre après l'étape de pompage,
le combustible gazeux liquéfié étant, lors de l'étape de pompage, pompé vers l'intérieur (10b) du tambour au moyen de la canalisation de combustible (11) tandis que la vanne (12, 12A, 12B) de canalisation de combustible et la vanne (15) de canalisation de gaz sont ouvertes ; et
dans l'étape d'évacuation de chauffage,
une étape de chauffage est mise en œuvre de façon à chauffer le combustible gazeux liquéfié présent à l'intérieur (10b) du tambour par un moyen de chauffage (13) afin de générer du gaz d'évent, tandis que la vanne (12, 12A, 12B) de canalisation de combustible et la vanne (15) de canalisation de gaz sont fermées, jusqu'à ce que la pression d'air à l'intérieur (10b) du tambour soit augmentée jusqu'à une valeur limite supérieure égale ou supérieure à la pression atmosphérique, et
une étape d'évacuation est mise en œuvre de façon à ouvrir la vanne (15) de canalisation de gaz lorsque la pression d'air à l'intérieur (10b) du tambour atteint la valeur limite supérieure, et à fermer la vanne (15) de canalisation de gaz lorsque la pression d'air à l'intérieur (10b) du tambour est réduite à une valeur limite inférieure égale ou supérieure à la pression atmosphérique, guidant ainsi le gaz d'évent présent à l'intérieur (10b) du tambour vers un poteau d'évacuation (3) et le déchargeant du poteau d'évacuation (3) pendant le temps pendant lequel la pression d'air à l'intérieur (10b) du tambour est réduit de la valeur limite supérieure à la valeur limite inférieure.

5. Le procédé d'évacuation de gaz d'évent selon la revendication 4, dans lequel l'étape de pompage est mise en œuvre jusqu'à ce que la position du niveau de liquide du combustible gazeux liquéfié stocké à l'intérieur (10b) du tambour soit supérieure à une première position, et l'étape d'évacuation de chauffage est mise en œuvre jusqu'à ce que la position du niveau de liquide du combustible gazeux liquéfié stocké à l'intérieur (10b) du tambour soit abaissée à la première position.

6. Le procédé d'évacuation de gaz d'évent selon la revendication 4, dans lequel l'étape de pompage est mise en œuvre jusqu'à ce que la position du niveau de liquide du combustible gazeux liquéfié stocké à l'intérieur (10b) du tambour atteigne une deuxième position, l'étape d'évacuation de chauffage est mise en œuvre jusqu'à ce que la position du niveau de liquide du combustible gazeux liquéfié stocké à l'intérieur (10b) du tambour soit abaissée de la deuxième position à une troisième position, et lorsque la position du niveau de liquide du combustible gazeux liquéfié stocké à l'intérieur (10b) du tambour atteint la troisième position, l'étape passe à l'étape de pompage.

7. Le système de canalisation (1) selon l'une quelconque des revendications 1 à 3, comprenant en outre un dispositif de commande (31) qui commande la vanne (15) de canalisation de gaz,
le système de canalisation comprenant en outre un capteur de pression (30) qui mesure la pression d'air à l'intérieur (10b) du tambour,
le dispositif de commande ayant un moyen (32) de détermination de valeur limite supérieure, un moyen (33) de détermination de valeur limite inférieure et un moyen de commande de vanne en tant que moyen pour commander la vanne (15) de canalisation de gaz alors que la vanne (12, 12A, 12B) de canalisation de combustible est fermée ;
le moyen de détermination de valeur limite supérieure détermine (S101) si une valeur mesurée du capteur de pression atteint une valeur limite supérieure égale ou supérieure à la pression atmosphérique alors que la vanne de canalisation de gaz est fermée ;
lorsque le moyen de détermination de valeur limite supérieure détermine que la valeur mesurée du capteur de pression atteint la valeur limite supérieure alors que la vanne de canalisation de gaz est fermée, le moyen de commande de vanne ouvre (S102) la vanne de canalisation de gaz ;
le moyen de détermination de valeur limite inférieure détermine (S103) si la valeur mesurée du capteur de pression est réduite à une valeur limite inférieure égale ou supérieure à la pression atmosphérique alors que la vanne de canalisation de gaz est ouverte ;
lorsque le moyen de détermination de la valeur limite inférieure détermine que la valeur mesurée du capteur de pression est réduite à la valeur limite inférieure alors que la vanne de la canalisation de gaz est ouverte, le moyen de commande de vanne ferme (S104) la vanne de la canalisation de gaz ; et
après que le moyen de commande de vanne ferme la vanne de la canalisation de gaz, le traitement revient à la détermination (S101) par les moyens de détermination de la valeur limite supérieure.

8. Le système de canalisation (1) selon la revendication 2, comprenant en outre un dispositif de commande (41) qui commande la vanne (12, 12A, 12B) de canalisation de combustible et la vanne (15) de canalisation de gaz,
le système de canalisation comprenant en outre un capteur de pression (30) qui mesure la pression d'air à l'intérieur (10b) du tambour, et un capteur de combustible (40) qui mesure la position du niveau de liquide du combustible gazeux liquéfié stocké à l'intérieur (10b) du tambour,
le dispositif de commande ayant un moyen de détermination de position (42) lors de la réception d'un signal d'arrêt, un premier moyen (43) de détermination de position, un moyen (44) de détermination de valeur limite supérieure, un moyen (45) de détermination de valeur limite inférieure et un moyen de commande de vanne (46) ;
lors de la réception d'un signal de démarrage de pompage de combustible par le dispositif de commande, provenant de l'un parmi le moteur et le système d'alimentation en combustible, le moyen de commande de vanne ouvre (S201) la vanne de canalisation de combustible et la vanne de canalisation de gaz ;
lors de la réception d'un signal d'arrêt de pompage de combustible par le dispositif de commande, provenant d'un émetteur du signal de démarrage de pompage de combustible, le moyen de détermination de position détermine, à la réception d'un signal d'arrêt (S202), sur la base d'une valeur mesurée du capteur de combustible, si la position du niveau de liquide du combustible gazeux liquéfié stocké à l'intérieur du tambour est inférieure à une première position ;
lorsque le moyen de détermination de position à la réception d'un signal d'arrêt ne détermine pas que la position du niveau de liquide du combustible gazeux liquéfié stocké à l'intérieur du tambour est inférieure à la première position, le moyen de commande de vanne ferme (S204) la vanne de canalisation de combustible et la vanne de canalisation de gaz ;
le premier moyen de détermination de position détermine (S207), sur la base de la valeur mesurée du capteur de combustible, si la position du niveau de liquide du combustible gazeux liquéfié stocké à l'intérieur du tambour est inférieure à la première position, alors que la vanne de canalisation de combustible et la vanne de canalisation de gaz sont fermées ;
lorsque le premier moyen de détermination de position ne détermine pas que la position du niveau de liquide du combustible gazeux liquéfié stocké à l'intérieur du tambour est inférieure à la première position, le moyen de détermination de valeur limite supérieure détermine (S208) si une valeur mesurée du capteur de pression atteint une valeur limite supérieure égale ou supérieure à la pression atmosphérique, alors que la vanne de canalisation de gaz est fermée ;
lorsque le moyen de détermination de la valeur limite supérieure détermine que la valeur mesurée du capteur de pression atteint la valeur limite supérieure alors que la vanne de canalisation de gaz est fermée, le moyen de commande de vanne ouvre (S209) la vanne de canalisation de gaz ;
lorsque le moyen de détermination de la valeur limite supérieure ne détermine pas que la valeur mesurée du capteur de pression atteint la valeur limite supérieure, alors que la vanne de canalisation de gaz est fermée, le moyen de détermination de la valeur limite inférieure détermine (S210) si la valeur mesurée du capteur de pression est réduite à une valeur limite inférieure égale ou supérieure à la pression atmosphérique, alors que la vanne de canalisation de gaz est ouverte ;
lorsque le moyen de détermination de la valeur limite inférieure détermine que la valeur mesurée du capteur de pression est réduite à la valeur limite inférieure alors que la vanne de canalisation de gaz est ouverte, le moyen de commande de vanne ferme (S211) la vanne de canalisation de gaz, après que le moyen de commande de vanne ouvre la vanne de canalisation de gaz, ou
lorsque le moyen de détermination de la valeur limite inférieure détermine que la valeur mesurée du capteur de pression n'est pas réduite à la valeur limite inférieure, ou après que le moyen de commande de vanne ferme la vanne de la canalisation de gaz, le traitement revient à la détermination (S207) par le premier moyen de détermination de position, et
lorsque le premier moyen de détermination de position détermine que la position du niveau de liquide du combustible gazeux liquéfié stocké à l'intérieur du tambour est inférieure à la première position, le moyen de commande de vanne ferme (8212) la vanne de la canalisation de gaz.

9. Le système de canalisation (1) selon l'une quelconque des revendications 1 à 3, comprenant en outre un dispositif de commande (51) qui commande la vanne (12, 12A, 12B) de canalisation de combustible et la vanne (15) de canalisation de gaz,
le système de canalisation comprenant en outre un capteur de pression (30) qui mesure la pression d'air à l'intérieur (10b) du tambour, et un capteur de combustible (40) qui mesure la quantité de combustible gazeux liquéfié stocké à l'intérieur (10b) du tambour,
le dispositif de commande ayant un deuxième moyen (52) de détermination de position, un troisième moyen (53) de détermination de position, un moyen (54) de détermination de valeur limite supérieure, un moyen (55) de détermination de valeur limite inférieure et un moyen (56) de commande de vanne ;
le deuxième moyen de détermination de position détermine (S301) si la position du niveau de liquide du combustible gazeux liquéfié stocké à l'intérieur du tambour atteint une deuxième position, alors que la vanne de canalisation de combustible et la vanne de canalisation de gaz sont ouvertes ;
lorsque le deuxième moyen de détermination de position détermine que la position du niveau de liquide du combustible gazeux liquéfié stocké à l'intérieur du tambour atteint la deuxième position, le moyen de commande de vanne ferme (S302) la vanne de canalisation de combustible et la vanne de canalisation de gaz ;
le troisième moyen de détermination de position détermine (S303) si la position du niveau de liquide du combustible gazeux liquéfié stocké à l'intérieur du tambour est abaissée à une troisième position, alors que la vanne de canalisation de combustible est fermée ;
lorsque le troisième moyen de détermination de position ne détermine pas que la position du niveau de liquide du combustible gazeux liquéfié stocké à l'intérieur du tambour est abaissée à la troisième position, le moyen de détermination de valeur limite supérieure détermine (S304) si une valeur mesurée du capteur de pression atteint une valeur limite supérieure égale ou supérieure à la pression atmosphérique, alors que la vanne de canalisation de gaz est fermée ;
lorsque le moyen de détermination de la valeur limite supérieure détermine que la valeur mesurée du capteur de pression atteint la valeur limite supérieure alors que la vanne de canalisation de gaz est fermée, le moyen de commande de vanne ouvre (S305) la vanne de canalisation de gaz ;
lorsque le moyen de détermination de la valeur limite supérieure ne détermine pas que la valeur mesurée du capteur de pression atteint la valeur limite supérieure alors que la vanne de canalisation de gaz est fermée, le moyen de détermination de la valeur limite inférieure détermine (S306) si la valeur mesurée du capteur de pression est réduite à une valeur limite inférieure égale ou supérieure à la pression atmosphérique, alors que la vanne de canalisation de gaz est ouverte ;
lorsque le moyen de détermination de la valeur limite inférieure détermine que la valeur mesurée du capteur de pression est réduite à la valeur limite inférieure alors que la vanne de canalisation de gaz est ouverte, le moyen de commande de vanne ferme (S307) la vanne de canalisation de gaz,
après que le moyen de commande de vanne ouvre la vanne de canalisation de gaz, ou lorsque le moyen de détermination de la valeur limite inférieure détermine que la valeur mesurée du capteur de pression n'est pas réduite à la valeur limite inférieure, ou après que le moyen de commande de vanne ferme la vanne de canalisation de gaz, le traitement revient à la détermination (S301) par le troisième moyen de détermination de position, et
lorsque le troisième moyen de détermination de position détermine que la position du niveau de liquide du combustible gazeux liquéfié stocké à l'intérieur du tambour est abaissée à la troisième position, le moyen de commande de vanne ouvre (S308) la vanne de la canalisation de gaz, puis traite le retour à la détermination (S301) par le deuxième moyen de détermination de position.
